# EUROPÄISCHE PATENTSCHRIFT

(11) **EP 2 827 826 B1**
(45) Veröffentlichungstag und Bekanntmachung des Hinweises auf die Patenterteilung: **01.03.2017**
(21) Anmeldenummer: 14700274.5
(22) Anmeldetag: 09.01.2014
(51) Int. Cl.: A61H 9/00, A63B 21/00, A41C 1/00, A63B 21/008, H02J 7/00

(54) **FITNESSGERÄT**
PIECE OF FITNESS EQUIPMENT
APPAREIL DE FITNESS

(30) Priorität: 31.01.2013 DE 102013101006; 31.01.2013 US 201361759093 P
(43) Veröffentlichungstag der Anmeldung: 28.01.2015
(73) Patentinhaber: Airpressure Bodyforming GmbH, 83471 Berchtesgaden (DE)
(72) Erfinder: SEKULA, Oliver, 83471 Berchtesgaden (DE); GREINWALDER, Hubert, 81379 München (DE); RECHENMACHER, Gert, 83471 Berchtesgaden (DE)
(74) Vertreter: Flügel Preissner Schober Seidel
(86) Internationale Anmeldenummer: PCT/EP2014/050323
(87) Internationale Veröffentlichungsnummer: WO 2014/117986

(56) Entgegenhaltungen:
- EP-A1- 2 168 553
- US-A1- 2002 062 515
- US-A1- 2012 089 059
- US-B1- 7 077 794

## Beschreibung

Die vorliegende Erfindung betrifft ein Fitnessgerät. Das Fitnessgerät umfasst wenigstens eine mit einem Fluid beaufschlagbare Druckkammer, die geeignet ist, an einem Körperteil einer Person anzuliegen, eine Pumpeinrichtung, die mit der Druckkammer verbunden ist und die geeignet ist, die Druckkammer mit dem Fluid zu beaufschlagen, eine Steuereinrichtung zum Steuern der Pumpeinrichtung und eine Haltevorrichtung, die zum Halten der Druckkammer an dem Körperteil dient.

Eine Vorrichtung der eingangs genannten Art ist beispielsweise aus der Druckschrift WO 2007/137313 A1 bekannt.

US 2002/062515 A1 beschreibt eine kurze Hose mit sowohl einer Massagefunktion als auch einer hüfthebenden Funktion. Die Hose setzt sich aus einem vorderen Stoff und einem hinteren Stoff zusammen, die um den Körper des Trägers gewickelt und mit Hilfe von Schnallelementen aneinander fixiert werden. Die Hose weist Lufttaschen auf, die mittels Verbindungsschläuchen mit einer Pumpe verbunden sind. Die Pumpe beaufschlagt die Lufttaschen gleichzeitig mit Luft, so dass diese sich auch gleichzeitig ausdehnen.

An der Hose sind außerdem Vibratoren vorgesehen, welche zusätzlich zur Erzielung einer Massagefunktion vibrieren.

US 7,077,794 B1 beschreibt einen Fitnessgürtel mit drei aufblasbaren Luftkammern. Der Fitnessgürtel weist einen gürtelförmigen Körper auf, welcher einen ersten Endbereich, einen Mittelbereich und einen zweiten Endbereich umfasst. In dem ersten Endbereich ist eine erste Luftkammer vorgesehen, welche zur Behandlung des Bauchs dient. Ferner weist der Fitnessgürtel im Mittelbereich eine zweite Luftkammer und eine dritte Luftkammer auf, welche parallel zu der Längsachse des Körpers angeordnet sind. Die Luftkammern dienen zur Behandlung der Lendenwirbel. Eine Pumpe ist über ein Zweiwegeventil entweder mit der ersten Luftkammer oder alternativ mit der zweiten Luftkammer und dritten Luftkammer verbunden. Die Luftkammern sind zwischen zwei Lagen des Körpers vorgesehen.

EP 2 168 553 A1 offenbart eine Kompressionsvorrichtung, die aus zwei Schichten aufgebaut ist, welche entlang von Dichtlinien miteinander verbunden sind. Durch die Dichtlinien werden drei Blasen sowie Zuleitungen bereitgestellt. Die Schichten sind aus PVC oder einem laminierten Material hergestellt. Eine Steuerung steuert einen Kompressor und einen Ventilmechanismus. Der von dem Kompressor erzeugte Luftdruck wird mit Hilfe des Ventilmechanismus abwechselnd in eine der drei Blasen geleitet.

US 2012/089059 A1 beschreibt eine Therapievorrichtung zur Behandlung der Wade und des Fußes eines Patienten. Die Therapievorrichtung weist eine Druckluftmanschette mit einem Netz an Zellen auf. Das Netz unterteilt sich in Kernzellen und Astzellen, so dass sich eingeführte Druckluft sukzessiv in dem Netz ausbreiten kann. Die Manschette wird aus übereinanderliegenden Lagen aus Kunststoffmaterialien hergestellt, die mittels Schweißen entlang von Nähten miteinander verbunden sind, um so das Netz an Zellen bereitzustellen. Ferner ist eine Pumpe vorgesehen, welche über eine Ventilanordnung Druckluft abwechselnd an die Zellen für die Wade oder an die Zellen für den Fuß leitet.

Die **Aufgabe** der vorliegenden Erfindung ist es, die Vorrichtung der eingangs genannten Art zu verbessern. Eine weitere Aufgabe der vorliegenden Erfindung ist es, die aus dem Stand der Technik bekannten Vorrichtungen anpassbarer an den Körperumfang der Person zu gestalten. Eine weitere Aufgabe der vorliegenden Erfindung ist es, eine Vorrichtung zu schaffen, die an unterschiedliche Körperteile anlegbar ist.

Die zuvor genannten Aufgaben werden durch ein Fitnessgerät nach Anspruch 1 **gelöst**.

Bevorzugte Ausgestaltungen des erfindungsgemäßen Fitnessgeräts sind in den weiteren Ansprüchen beschrieben.

Das Fitnessgerät wird im Folgenden Vorrichtung genannt.

Erfindungsgemäß ist vorgesehen, dass die Druckkammer schlauchförmig, also in Form eines Schlauches ausgebildet ist, der sich um das Körperteil herumschlingt. Die erfindungsgemäße Ausgestaltung bietet den Vorteil, dass die Druckkammer an unterschiedliche Körperteile oder Körperbereiche und an Personen mit unterschiedlichen Körpermaßen oder Körperumfängen anlegbar ist. Die Haltevorrichtung weist wenigstens einen Kanal auf, in den der Schlauch einführbar ist. Die Haltevorrichtung ist in der Gestalt eines Bekleidungsstücks ausgebildet.

Die erfindungsgemäße Vorrichtung dient zur Intensivierung der Fettverbrennung in einem Körperteil einer Person durch die Anregung der Durchblutung in diesem Körperteil. Vorteilhafterweise weist die Person dabei einen Puls im Fettverbrennungsbereich auf. Dies kann beispielsweise dadurch erreicht werden, dass die Person während der Verwendung der erfindungsgemäßen Vorrichtung ein Ausdauertraining (beziehungsweise Fettverbrennungstraining) auf einem entsprechenden Trainingsgerät ausführt. Das Fluid ist vorzugsweise ein Gas oder ein Gasgemisch, weiterhin vorzugsweise Luft.

In einer bevorzugten Ausgestaltung der Vorrichtung ist die Pumpeinrichtung an der Person anlegbar. Erfindungsgemäß umfasst die Haltevorrichtung eine Schicht, die zwischen Druckkammer und dem Körperteil anordenbar ist. Vorzugsweise ist die Haltevorrichtung mit der Druckkammer lösbar verbindbar.

In einer bevorzugten Ausgestaltung erstreckt sich die Druckkammer im Wesentlichen in einer Längsrichtung und weist quer zur Längsrichtung einen annähernd kreisförmigen Querschnitt auf. Diese Ausgestaltung bietet den Vorteil, dass die Druckkammer in einfacher Weise mit der Haltevorrichtung verbindbar ist, indem die Druckkammer in die Haltevorrichtung eingeführt wird.

Bevorzugterweise ist die Druckkammer aus Silikon gefertigt. Diese Ausgestaltung bietet den Vorteil, dass die Druckkammer in Längsrichtung reversibel dehnbar ist, so dass die Druckkammer sich an den Körperteil anschmiegt und der Tragekomfort der Vorrichtung verbessert wird.

Bevorzugt weist die Druckkammer eine Anschlusseinrichtung auf, die mit der Pumpeinrichtung lösbar verbindbar ist. Diese Ausgestaltung ermöglicht es, dass ein und dieselbe Pumpeinrichtung mit unterschiedlichen Druckkammern verwendbar ist, die beispielsweise unterschiedliche Längen oder unterschiedliche Durchmesser aufweisen. Durch diese Ausgestaltung ist die Vorrichtung vielseitig einsetzbar.

Die Anschlusseinrichtung umfasst vorzugsweise ein Reduktionselement, das weiterhin vorzugsweise aus Silikon gefertigt ist. Das Reduktionselement umfasst vorzugsweise einen Verbindungsbereich und einen Anschlussbereich. Vorzugsweise ist der Verbindungsbereich mit der Druckkammer, vorzugsweise stoffschlüssig, verbunden.

Weiterhin vorzugsweise weist die Druckkammer eine Abschlusseinrichtung auf, die die Druckkammer am gegenüberliegenden Ende der Anschlusseinrichtung abschließt. Diese Ausgestaltung bietet den Vorteil, dass die Druckkammer in der gewünschten Länge in einfacher Weise hergestellt werden kann, indem ein die Druckkammer bildender Schlauch in der gewünschten Länge abgelängt wird und mittels der Abschlusseinrichtung abgeschlossen wird. Vorzugsweise kann die Abschlusseinrichtung durch einen in die Druckkammer eingebrachten Knoten gebildet sein.

Vorzugsweise umfasst die Druckkammer wenigstens eine Abzweigeinrichtung, die zwischen einem Basisabschnitt und wenigstens zwei Zweigabschnitten angeordnet ist, wobei Zweigabschnitte und Basisabschnitt mit der Abzweigeinrichtung verbunden sind. Diese Ausgestaltung bietet den Vorteil, dass die Druckkammer an ihren Zweigabschnitten an mehreren verschiedenen Körperpartien entlang laufen kann. Dies ist beispielsweise vorteilhaft, wenn die Vorrichtung an der Gesäß- und Oberschenkelregion der Person angelegt wird, wobei der Basisabschnitt zumindest oberhalb der Leiste verläuft und die wenigstens zwei Zweigabschnitte jeweils entlang eines Oberschenkels verlaufen.

In einer bevorzugten Ausgestaltung ist die Abzweigeinrichtung unmittelbar mit der Anschlusseinrichtung verbunden. Weiterhin vorzugsweise ist die Abzweigeinrichtung einteilig mit der Anschlusseinrichtung ausgebildet. Gemäß dieser Ausgestaltung ist zwischen der Anschlusseinrichtung und der Abzweigeinrichtung kein Basisabschnitt angeordnet. Diese Ausgestaltung bietet den Vorteil, dass auf ein gesondertes, die Abzweigeinrichtung bildendes Bauteil verzichtet werden kann, so dass der Tragekomfort für den Benutzer verbessert wird.

Vorzugsweise weist die Druckkammer einen quer zur Längsrichtung verlaufenden Querschnitt auf, der zwischen 10 mm und 40 mm, vorzugsweise 20 mm bis 30 mm beträgt. Vorzugsweise weist der Basisabschnitt und/oder der Zweigabschnitt einen Durchmesser von 10 mm bis 40 mm, vorzugsweise 20 mm bis 30 mm auf.

Vorzugsweise weist der Verbindungsbereich einen quer zur Längsrichtung verlaufenden Querschnitt auf, der zwischen 10 mm und 40 mm, vorzugsweise zwischen 20 mm und 30 mm beträgt. Vorzugsweise weist der Anschlussbereich einen quer zur Längsrichtung verlaufenden Querschnitt auf, der zwischen 10 mm und 2 mm, weiterhin vorzugsweise zwischen 3 mm und 6 mm beträgt.

Vorzugsweise weist die Druckkammer und/oder der Basisabschnitt und/oder der Zweigabschnitt eine Wandstärke auf, die zwischen 0,1 mm und 2 mm, vorzugsweise zwischen 0,2 mm und 1 mm, weiterhin vorzugsweise ca. 0,5 mm, beträgt.

In einer bevorzugten Ausgestaltung ist die erfindungsgemäße Vorrichtung durch zwei Druckkammern gekennzeichnet, wobei die Pumpeinrichtung geeignet ist, die Druckkammern abwechselnd mit dem Fluid zu beaufschlagen. Diese Ausgestaltung verbessert das durch die erfindungsgemäße Vorrichtung erzielbare Ergebnis. Zwei der Druckkammern können auch als erste Druckkammer und zweite Druckkammer bezeichnet werden.

Bevorzugterweise ist der Pumpeinrichtung eine Tragevorrichtung beigeordnet. Die Tragevorrichtung dient dazu, die Pumpeinrichtung an dem Körper der Person zu befestigen. Vorzugsweise umfasst die Pumpeinrichtung eine Ladezustandsanzeigeeinrichtung, die dazu dient, den Ladezustand eines Akkus der Pumpeinrichtung dem Benutzer anzuzeigen. Die Anzeigeeinrichtung kann ein Display und/oder einen Lautsprecher umfassen.

Vorzugsweise ist die Haltevorrichtung aus einem elastischen Werkstoff gefertigt. Diese Ausgestaltung gewährleistet, dass sich die Haltevorrichtung an den Körperteil der Person anschmiegt.

Vorzugsweise ist die Haltevorrichtung aus einem textilen Material gefertigt. Weiterhin vorzugsweise ist die Haltevorrichtung aus einem atmungsaktiven Material gefertigt. Diese Ausgestaltung trägt wesentlich zum Tragekomfort der Vorrichtung bei.

In einer bevorzugten Ausgestaltung weist die Haltevorrichtung wenigstens einen Kanal auf, in welchem der Basisabschnitt und/oder der Zweigabschnitt einführbar ist.

Erfindungsgemäß weist die Haltevorrichtung wenigstens eine erste Lage und wenigstens eine zweite Lage auf. Erfindungsgemäß verläuft der Kanal zwischen der ersten Lage und der zweiten Lage. Vorzugsweise sind die erste Lage und die zweite Lage mittels wenigstens einer Naht miteinander verbunden. Weiterhin vorzugsweise umgrenzt die erste Lage, die zweite Lage und die wenigstens eine Naht den Kanal. Die Haltevorrichtung ist in der Gestalt eines Bekleidungsstücks ausgebildet. Diese Ausgestaltung erleichtert das Anlegen der Vorrichtung an dem Körperteil. Bevorzugterweise ist das Bekleidungsstück als Hose ausgebildet.

Erfindungsgemäß bildet die zweite Lage die Schicht. Erfindungsgemäß ist die erste Lage dicker als die zweite Lage ausgebildet. Weiterhin vorzugsweise ist die erste Lage wenigstens um einen Faktor 2 dicker ausgebildet als die zweite Lage. Erfindungsgemäß ist die zweite Lage dehnbar ausgestaltet. Weiterhin vorzugsweise ist die zweite Lage dehnbarer als die erste Lage. Diese Ausgestaltung ermöglicht es, dass der aufgebaute Druck, der durch die Druckkammer auf das Körperteil ausgeübt wird, zwar durch die erste Lage eine Begrenzung erfährt, die zweite Lage möglichst dem Druck nachgibt und somit die Wirkung der Vorrichtung verbessert wird. Da durch den sich in der Druckkammer aufbauenden Druck die Kammer von dem Körperteil abzuheben neigt, entsteht eine Verlängerung des Umfangs der Druckkammer um einige Prozentpunkte. Die Elastizität der Druckkammer lässt diese Verlängerung zu, wirkt dieser aber entgegen, wodurch eine Unterstützung der direkten Luftdruckwirkung entsteht.

Es ist bevorzugt, dass die Pumpeinrichtung eine Sensoreinrichtung aufweist, die den Druck des Fluids in der ersten Leitung und/oder in der zweiten Leitung misst.

Die Sensoreinrichtung hat vorzugsweise einen Drucksensor, der den Druck des Fuids in der ersten und/oder in der zweiten Leitung misst. Das Ergebnis der Druckmessung wird vorzugsweise an die Steuereinrichtung weitergeleitet, die abhängig von der Druckmessung der Sensoreinrichtung den Betrieb der Pumpeinrichtung steuert. Insbesondere wenn der von der Sensoreinrichtung gemessene Druck über einem Grenzdruck liegt, wird der Betrieb der Pumpeinrichtung gestoppt. Der Grenzdruck ist vorzugsweise gleich dem Arbeitsdruck oder ist 5%, 10% oder 20% größer als der Arbeitsdruck.

Insbesondere wenn der Druck in der ersten und/oder in der zweiten Leitung über einem vorgegebenen Arbeitsdruck ist, deutet dies auf ein Verstopfen, ein Abknicken oder eine anderweitige Blockierung der ersten und/oder zweiten Leitung hin. In einem solchen Fall wird dann insbesondere der Betrieb der Pumpeinrichtung beendet. Die Sensoreinrichtung kann daher dazu verwendet werden, den ordnungsgemäßen Anschluss und die richtige Anbringung des Druckgürtels der Pumpeinrichtung und der Leitungen hinzuweisen.

Es ist bevorzugt, dass die Pumpeinrichtung eine, insbesondere wiederaufladbare, Batterie und eine Ladezustandserkennungseinrichtung aufweist, wobei die Ladezustandserkennungseinrichtung den Ladezustand der wiederaufladbaren Batterie detektiert und vorzugsweise eine Benachrichtigungseinrichtung zur Ausgabe einer Benachrichtigung, insbesondere eines Geräuschs, aufweist.

Vorzugsweise wird die Pumpeinrichtung und die Steuereinrichtung und/oder die Sensoreinrichtung mittels der Batterie betrieben. Es kann eine wiederaufladbare oder eine nicht wiederaufladbare Batterie verwendet werden. Die Ladezustandserkennungseinrichtung detektiert den Ladezustand der wiederaufladbaren Batterie beispielsweise mittels einer Spannungs- und einer Strommessung. Wird bestimmt, dass der Ladezustand der Batterie unter einem unteren Grenzwert liegt, wird die Benachrichtigungseinrichtung aktiviert, um eine Benachrichtigung an den Verwender auszugeben. Die Benachrichtigung kann mittels einer Anzeige, beispielsweise mittels einer Leuchte, realisiert werden. Vorteilhaft bietet sich an, die Benachrichtigung mittels eines Geräuschs, das beispielsweise durch einen Lautsprecher erzeugt wird, bereitzustellen. Dies bietet den Vorteil, dass die Benachrichtigung, dass der Ladezustand unter einem gewissen Niveau ist, auch dann von dem Verwender bemerkt werden kann, wenn die Pumpeinrichtung in der Tragevorrichtung befestigt ist.

Eine Tragevorrichtung zum Tragen der Pumpeinrichtung an dem Körperteil einer Person umfasst einen Grundkörper, der ein erstes Ende und ein zweites Ende aufweist, ein Verbindungsmittel, das geeignet ist das erste Ende und das zweite Ende miteinander zu verbinden, und ein Haltemittel zum lösbaren Befestigen der Pumpeinrichtung an dem Grundkörper.

Die Pumpeinrichtung ist vorzugsweise eine solche Pumpeinrichtung, wie sie später beschrieben wird. Der Körperteil, an dem die Tragevorrichtung angebracht werden soll, kann vorzugsweise der Rumpf, insbesondere der Bauchbereich der Person, sein. Der Grundkörper ist beispielsweise wie ein längliches Band ausgebildet. Durch Verbinden des ersten Endes mit dem zweiten Ende kann die Tragevorrichtung an dem Körperteil der Person durch Umschließen befestigt werden, so dass die Person die Pumpeinrichtung stets bei sich tragen kann. Mittels des Haltemittels kann die Pumpeinrichtung an dem Grundkörper befestigt werden, so dass vorzugsweise die Pumpeinrichtung durch die Tragevorrichtung gehalten wird. Das Haltemittel kann lösbar oder fest an dem Grundkörper angebracht sein.

Es ist bevorzugt, dass der Grundkörper eine dem Körperteil zugewandte Innenseite und eine dem Körperteil abgewandte Außenseite aufweist, wobei das Haltemittel auf der Innenseite angeordnet ist und vorzugsweise als eine verschließbare Tasche ausgebildet ist.

Durch die Anordnung des Haltemittels an der Innenseite, kann die Pumpeinrichtung derart mittels der Tragevorrichtung von der Person getragen werden, dass die Pumpeinrichtung nicht sichtbar ist. Ferner müssen Leitungen, die von der Pumpeinrichtung wegführen und zum Beispiel an eine Druckkammer, so wie sie zuvor beschrieben wurde, angeschlossen werden, nicht um den Gürtel herumgeführt werden. Durch die bevorzugte Ausbildung des Haltemittels als eine verschließbare Tasche kann die Pumpeinrichtung schnell und einfach an der Tragevorrichtung fixiert werden.

Es ist bevorzugt, dass das Haltemittel eine erste Öffnung und eine zweite Öffnung aufweist, wobei vorzugsweise die zweite Öffnung der ersten Öffnung gegenüberliegend angeordnet ist.

Die beiden Öffnungen dienen vorzugsweise dazu, einen Zugang zu der Pumpeinrichtung zu schaffen. Beispielsweise kann mittels der ersten Öffnung eine Bedieneinrichtung, wie beispielsweise ein Schalter, an der Pumpeinrichtung bedient werden. Ferner können Leitungen, die von der Pumpeinrichtung wegführen, über die zweite Öffnung aus dem Haltemittel herausgeführt werden, so dass das Haltemittel geschlossen werden kann, was wiederum eine sichere Fixierung der Pumpeinrichtung ermöglicht.

Es ist bevorzugt, dass der Grundkörper an der Innenseite wenigstens eine Lasche aufweist.

Die Lasche dient vorzugsweise dazu, die Leitungen der Pumpeinrichtung zu halten und damit auch zu führen. Ferner lässt sich auch ein Verrutschen der Leitungen vermeiden, was zum einen für die Person als störend empfunden werden kann und zum anderen auch zum Ablösen der Leitungen von der Pumpeinrichtung oder dem Druckgürtel führen kann.

Es ist bevorzugt, dass der Grundkörper und/oder das Haltemittel und/oder die Lasche aus einem textilen, insbesondere atmungsaktiven Material gefertigt sind, das vorzugsweise elastisch ist und weiter vorzugsweise Neopren umfasst.

Der Grundkörper, das Haltemittel und die Lasche können aus dem gleichen Material gefertigt sein oder aus unterschiedlichen Materialien. Wird ein elastisches Material verwendet, erhöht dies vorzugsweise die Bewegungsfreiheit der Person, die die Tragevorrichtung trägt. Insbesondere, wenn das Haltemittel aus einem elastischen Material hergestellt ist, lässt sich die Pumpeinrichtung durch die Elastizität des Haltemittels sicher fixieren, da die Spannung des elastischen Materials eine höhere Haltekraft zum Halten der Pumpeinrichtung erzeugen kann. Bevorzugt ist das Material Neopren.

Es ist bevorzugt, dass das Verbindungsmittel ein Hakenband, das an der Innenseite im Bereich des ersten Endes angeordnet ist, und ein Flauschband, das an der Außenseite im Bereich des zweiten Endes angeordnet ist, aufweist, wobei zum Verbinden des ersten Endes und des zweiten Endes das Hakenband mit dem Flauschband in Eingriff bringbar ist.

Das Hakenband weist vorzugsweise eine Vielzahl von Haken, insbesondere Widerhaken oder Pilzköpfe, auf, die sich mit dem Flauschband, das vorzugsweise eine Vielzahl von verkräuselten Fäden aufweist, verhakt. Ein Beispiel für das Verbindungsmittel ist ein Klettverschluss. Vorzugsweise erstreckt sich das Flauschband über einen ausgedehnten Bereich, so dass die Tragevorrichtung an Körperteile verschiedenster Abmessungen angepasst werden kann.

Es ist bevorzugt, dass der Grundkörper an der Außenseite zumindest bereichsweise mit einem weiteren Flauschband versehen ist.

Vorzugsweise erstreckt sich das weitere Flauschband über den Großteil der Außenseite des Grundkörpers und mehr vorzugsweise ist das Flauschband des Verbindungsmittels am zweiten Ende des Grundkörpers kontinuierlich mit dem weiteren Flauschband ausgebildet.

Es ist bevorzugt, dass das Fitnessgerät ferner eine Halterung zum Befestigen eines Gegenstands, insbesondere einer Medienwiedergabeeinrichtung, an dem Grundkörper aufweist, wobei vorzugsweise die Halterung aus einem textilen, insbesondere elastischen, Material gefertigt ist, das vorzugsweise Neopren umfasst.

Der Gegenstand kann beispielsweise ein MP3-Player oder ein Mobiltelefon sein. Wenn das Material der Halterung aus elastischem Material gefertigt ist, kann der Gegenstand durch die beim Einfügen erzeugte Spannung sicher in der Halterung fixiert werden.

Es ist bevorzugt, dass die Halterung lösbar an dem Grundkörper befestigt ist, wobei vorzugsweise die Halterung ein zweites Hakenband zur lösbaren Befestigung an dem Flauschband der Tragevorrichtung aufweist.

Wenn das weitere Flauschband des Grundkörpers sich über einen großen Bereich der Tragevorrichtung erstreckt, kann die Halterung örtlich variabel an der Tragevorrichtung befestigt werden. Auch hier kann die lösbare Befestigung ein Klettverschluss zwischen dem Grundkörper und der Halterung sein.

Ein Verfahren zur Steuerung der erfindungsgemäßen Vorrichtung, wobei die Pumpeinrichtung ein erstes Ventil, das mit der ersten Druckkammer verbunden ist, ein zweites Ventil, das mit der zweiten Druckkammer verbunden ist, und einen Kompressor aufweist, wobei der Kompressor mit dem ersten Ventil und mit dem zweiten Ventil verbunden ist, umfasst folgende Verfahrensschritte:
a) Öffnen des ersten Ventils;
b) Betätigen des Kompressors, während das erste Ventil geöffnet ist;
c) Anhalten des Kompressors, sobald der Druck des Fluids in der ersten Druckkammer einen vorgegebenen Druck erreicht;
d) Öffnen des zweiten Ventils;
e) Verschließen des ersten Ventils;
f) Betätigen des Kompressors; während das zweite Ventil geöffnet ist;
g) Anhalten des Kompressors, sobald der Druck des Fluids in der zweiten Druckkammer den vorgegebenen Druck erreicht;
h) Öffnen des ersten Ventils und Verschließen des zweiten Ventils.

Vorzugsweise wird Schritt e) nach Schritt d) durchgeführt, um einen Druckausgleich zwischen der ersten Kammer und der zweiten Kammer zu erzielen.

Alternativ wird Schritt d) nach Schritt e) durchgeführt, und/oder Schritt d) und Schritt e) zugleich ausgeführt. Vorzugsweise wird der Druckausgleich zwischen der ersten Kammer und der zweiten Kammer durch Herstellung einer Verbindung zwischen der ersten Kammer und der zweiten Kammer erzielt.

Vorzugsweise wird während Schritt h) das Öffnen des ersten Ventils vor dem Verschließen des zweiten Ventils durchgeführt.

Alternativ wird während Schritt h) das Öffnen des ersten Ventils nach dem Verschließen des zweiten Ventils und/oder während des Verschließens des zweiten Ventils durchgeführt.

Vorzugsweise wird während der Durchführung der Schritte b) und/oder c), und/oder nach der Durchführung der Schritte b) und/oder c) eine Verbindung zwischen der zweiten Kammer und einer die Vorrichtung umgebende Umgebung hergestellt.

Vorzugsweise wird während der Durchführung der Schritte f) und/oder g), und/oder nach der Durchführung der Schritte f) und/oder g) eine Verbindung zwischen der ersten Kammer und der die Vorrichtung umgebende Umgebung hergestellt.

In einer bevorzugten Ausgestaltung wird der Kompressor in den Verfahrensschritten b) und f) während 2 bis 10 Sekunden, vorzugsweise während ca. 5 Sekunden betätigt.

Vorzugsweise beträgt der zu erreichende Druck des Fluids in der ersten Druckkammer und/oder der zweiten Druckkammer zwischen 0,3 bar und 0,8 bar, vorzugsweise 0,6 bar.

Bevorzugterweise wird zwischen den Schritten c) und d) der Druck in der ersten Druckkammer sowie zwischen den Schritten g) und h) der Druck in der zweiten Druckkammer während 6 bis 30 Sekunden, vorzugsweise ca. 15 Sekunden, aufrechterhalten.

In einer bevorzugten Ausgestaltung bleiben zwischen den Verfahrensschritten d) und e) zugleich das erste Ventil und das zweite Ventil während 1 bis 5 Sekunden, vorzugsweise während ca. 3 Sekunden, geöffnet. In einer bevorzugten Ausgestaltung bleiben zwischen den Verfahrensschritten h) und a) zugleich das erste Ventil und das zweite Ventil während 1 bis 5 Sekunden, vorzugsweise während ca. 3 Sekunden, geöffnet. Diese Ausgestaltung bietet den Vorteil, dass zwischen den Druckkammern ein Druckausgleich stattfindet und somit die Menge des zu beaufschlagenden Fluids reduziert wird, wodurch eine geringere Pumpleistung des Kompressors erforderlich ist.

Vorzugsweise wird bei dem Verfahren ein Funktionstest der Pumpeinrichtung durchgeführt. Vorzugsweise wird der Funktionstest vor dem Betätigen des Kompressors durchgeführt. Vorzugsweise umfasst der Funktionstest eine Überprüfung des Zustands der Druckkammer, bzw. der Schläuche und/oder des Reduktionselements. Bevorzugterweise kann der Zustand frei, verstopft oder geknickt sein. Vorzugsweise kann mittels des Funktionstests festgestellt werden, ob die Druckkammer, bzw. die Schläuche und/oder das Reduktionselement frei, verstopft oder geknickt sind. Vorzugsweise kann mittels des Funktionstests ein innerhalb der Druckkammer auftretender Druckverlust und/oder eine undichte Stelle der Druckkammer erkannt werden.

Eine Ladevorrichtung zum Laden der Pumpeinrichtung umfasst eine wiederaufladbare Batterie und einen Kontaktbereich, der mit der Batterie elektrisch verbunden ist. Die Ladevorrichtung umfasst ferner wenigstens eine Einschubeinrichtung, in welche die Pumpeinrichtung einführbar ist, und eine Stromquelle, wobei die Einschubeinrichtung einen Gegenkontaktbereich aufweist, der den Kontaktbereich berührt und mit der Stromquelle verbunden ist, wenn die Pumpeinrichtung in die Einschubeinrichtung eingeführt ist, um die Batterie zu laden.

Die Stromquelle ist insbesondere ein Anschluss an ein externes Stromnetz und kann einen Transformator aufweisen, um insbesondere die Spannung des externen Stromnetzes auf die Spannung der wiederaufladbaren Batterie zu transformieren.

Der Kontaktbereich der Pumpeinrichtung kann eine außen zugängliche Buchse sein. Wird die Pumpeinrichtung in die Einschubeinrichtung eingeführt, stößt der Kontaktbereich gegen den Gegenkontaktbereich und verbindet die Batterie mit der Stromquelle. Der Gegenkontaktbereich kann ein Stift oder ein Pin sein.

Es ist bevorzugt, dass die Ladevorrichtung eine Mehrzahl von Einschubeinrichtungen aufweist, die vorzugsweise übereinander angeordnet sind. Es ist ferner bevorzugt, dass die Gegenkontaktbereiche der Einschubeinrichtungen jeweils mit einer einzigen Stromquelle verbunden sind.

Dadurch lässt sich insbesondere eine Mehrzahl von Einschubeinrichtungen mit einer Ladevorrichtung aufladen, für die vorzugsweise nur ein Anschluss an ein externes Stromnetz notwendig ist. Bevorzugt ist auch, dass sich die Einschubeinrichtungen aufeinanderstapeln lassen, so dass sie fest aufeinander stehen und gleichzeitig untereinander elektrisch verbunden sind.

Ferner ist die Bedienung der Ladevorrichtung besonders einfach, da die Pumpeinrichtung nur in die Ladevoreinrichtung, insbesondere in die Einschubeinrichtung eingeführt werden muss. Es ist insbesondere nicht nötig, die Pumpeinrichtung in einem separaten Schritt an die Ladevorrichtung anzuschließen.

Es ist bevorzugt, dass das Fitnessgerät ferner eine Erkennungseinrichtung umfasst, die geeignet ist, ein Identifizierungsmittel, insbesondere einen Mitgliedsausweis oder eine Bankkarte, zu erkennen, wobei vorzugsweise die Erkennungseinrichtung eine Sicherungseinrichtung aufweist, welche die Pumpeinrichtung gegen ein Entnehmen sichert, wenn das Identifizierungsmittel nicht erkannt wurde.

Das Identifizierungsmittel kann eine Bankkarte, ein Mitgliedsausweis oder dergleichen sein und kann für jede Einschubeinrichtung vorgesehen sein. Ist das Identifizierungsmittel kartenförmig, kann die Erkennungseinrichtung ein Kartenlesegerät sein, das insbesondere jeder Einschubeinrichtung zugeordnet ist. Wird das Identifizierungsmittel von der Erkennungseinrichtung erkannt, kann die Sicherungseinrichtung die Pumpeinrichtung in der Einschubeinrichtung freigeben, so dass der Verwender die Pumpeinrichtung entnehmen kann. Die Sicherungseinrichtung ist vorzugsweise jeder Einschubeinrichtung zugeordnet, so dass das Entnehmen einzelner Pumpeinrichtungen individuell gesteuert werden kann. Die Sicherungseinrichtung kann beispielsweise eine Rasteinrichtung sein.

Mit Hilfe der Erkennungseinrichtung und der Sicherungseinrichtung ist es möglich, die Ausgabe von Pumpeinrichtungen mittels der Ladevorrichtung automatisch zu steuern. Das Identifizierungsmittel kann dabei als Erkennung oder als Pfand dienen.

Es ist bevorzugt, dass die Ladevorrichtung, insbesondere wenigstens eine Einschubeinrichtung, eine Fixiereinrichtung zur Befestigung an einer Wand aufweist.

Die Fixiereinrichtung kann beispielsweise eine Öse oder eine Ausnehmung in der Einschubeinrichtung sein, mittels welcher die Ladevorrichtung an einer Wand befestigt werden kann. Insbesondere ist die Fixiereinrichtung durch die Einschubeinrichtung hindurch einsehbar, so dass beispielsweise eine Schraube durch die Sicherungseinrichtung hindurch geschraubt werden kann. Die Fixiereinrichtung kann an jeder Einschubeinrichtung oder nur an einer Einschubeinrichtung der Ladevorrichtung vorgesehen sein. Mittels der Fixiereinrichtung kann die Ladevorrichtung direkt an einer Wand befestigt werden oder, wenn die Ladevorrichtung abgestellt wird, gegen Umfallen gesichert werden.

Es ist bevorzugt, dass die Ladevorrichtung ferner eine Anbringungseinrichtung zum Befestigen der Tragevorrichtung und/oder des Druckgürtels aufweist.

Die Anbringungseinrichtung kann beispielsweise als ein Regal oder als Vorsprünge zum Anhängen des Druckgürtels und/oder der Tragevorrichtung, wie beispielsweise in Art einer Garderobe, ausgebildet sein. Die Anbringungseinrichtung kann ferner wagrechte Stangen aufweisen, auf die der Druckgürtel und/oder die Tragevorrichtung gehängt werden können.

Ein Fitnessgerät kann ein Befestigungsmittel umfassen, das einen Haltebereich zum Befestigen der Pumpeinrichtung und einen Befestigungsbereich zum Befestigen des Befestigungsmittels an einem Objekt hat, wobei der Befestigungsbereich einen Einlageabschnitt und einen Fixierabschnitt aufweist.

Das Befestigungsmittel dient insbesondere dazu, die Pumpeinrichtung an einem Gerät zur körperlichen Ertüchtigung, beispielsweise ein Laufband, ein Indoorrad oder ein Stepper, zu befestigen. Wenn gleichzeitig die Druckkammer, wie zuvor beschrieben, verwendet wird, kann die Pumpeinrichtung an dem Gerät angebracht werden, wozu die Tragevorrichtung dann nicht notwendig ist. Der Haltebereich dient insbesondere zum Fixieren der Pumpeinrichtung, und der Befestigungsbereich wird an dem Gerät, insbesondere an einer Stange des Geräts angebracht. Dazu kann das Gerät oder die Stange an dem Anlageabschnitt anliegen und durch den Fixierungsabschnitt fixiert sein. Das Befestigungsmittel kann an einer vertikalen oder horizontalen Stange angebracht werden.

Es ist bevorzugt, dass der Haltebereich eine obere Halbseite aufweist, wobei die obere Halbseite zum Einlegen der Pumpvorrichtung offen ist.

Dies bedeutet, dass der Haltebereich als eine Schale ausgebildet sein kann, die insbesondere ähnliche Innenabmessungen wie die Außenabmessungen der Pumpeinrichtung hat, so dass die Pumpeinrichtung zwar leicht eingelegt werden kann, und trotzdem gegen Vibrationen fixiert ist.

Es ist bevorzugt, dass der Anlageabschnitt einen Grundabschnitt und einen Kontaktabschnitt aufweist, wobei vorzugsweise der Grundabschnitt wenigstens zwei Öffnungen hat, in die der Kontaktabschnitt einsteckbar ist. Es ist ferner bevorzugt, dass der Kontaktabschnitt als eine Anlagefläche oder als wenigstens zwei Anlagevorsprünge ausgebildet ist.

Der Grundabschnitt dient insbesondere dafür, verschiedene Kontaktabschnitte an dem Befestigungsmittel anzubringen. Da das Gerät und insbesondere die Stange verschiedenste Abmessungen haben können, ist es zweckmäßig, den Befestigungsbereich an das Gerät anzupassen. Dazu sind verschiedene Kontaktabschnitte hilfreich. Dadurch, dass der Kontaktabschnitt in Öffnungen des Grundabschnitts eingeschraubt oder eingesteckt, insbesondere auch verrastet, werden kann, ist ein einfacher Austausch des Kontaktabschnitts möglich. Der Grundabschnitt hat vorzugsweise vier Öffnungen. An dem Grundabschnitt oder einem Kontaktabschnitt können zum gegenseitigen Verbinden Rastvorrichtungen vorgesehen sein.

Es ist bevorzugt, dass der Kontaktabschnitt als eine Anlagefläche oder als wenigstens zwei Anlagevorsprünge ausgebildet ist.

Die Anlagefläche kann planar oder mit einer runden oder eckigen Ausstülpung versehen sein. Die Anlagenvorsprünge können Gummipfropfen sein, die einen besonders hohen Reibungskoeffizienten haben, so dass eine hohe Reibung zwischen dem Gerät und dem Kontaktabschnitt entsteht.

Es ist bevorzugt, dass der Fixierungsabschnitt ein biegsames Band, insbesondere ein Kabelbinder ist.

Ein Kabelbinder stellt ein besonders einfaches und schnelles Befestigungsmittel an dem Gerät dar. Es ist aber auch jedes andere Band, das an seinen freien Enden beispielsweise mittels einer Schnalle oder einer Rastvorrichtung geschlossen werden kann, möglich.

Weitere Merkmale und Vorteile der erfindungsgemäßen Vorrichtung (Fitnessgerät) ergeben sich aus zwei nachfolgend wiedergegebenen Ausführungsbeispielen. In den die Ausführungsbeispiele lediglich schematisch darstellenden Zeichnungen veranschaulichen im Einzelnen:
- Fig. 1: die erfindungsgemäße Vorrichtung nach einem ersten Ausführungsbeispiel in einer Vorderansicht;
- Fig. 2: die erfindungsgemäße Vorrichtung nach einem ersten Ausführungsbeispiel in einer Rückansicht;
- Fig. 3: eine perspektivische Ansicht der erfindungsgemäßen Vorrichtung nach einem zweiten Ausführungsbeispiel;
- Fig. 4: schematische Darstellung der Haltevorrichtung nach dem zweiten Ausführungsbeispiel;
- Fig. 4a: die Teilansicht des Ausschnitts A der in Fig. 4 wiedergegebenen Haltevorrichtung; und
- Fig.5: eine schematische Darstellung des Wirkprinzips des erfindungsgemäßen Fitnessgeräts.
- Fig. 6: eine Außenseite der Tragevorrichtung;
- Fig. 7: eine Innenseite der Tragevorrichtung mit einer Pumpeinrichtung;
- Fig. 8: eine Leitung;

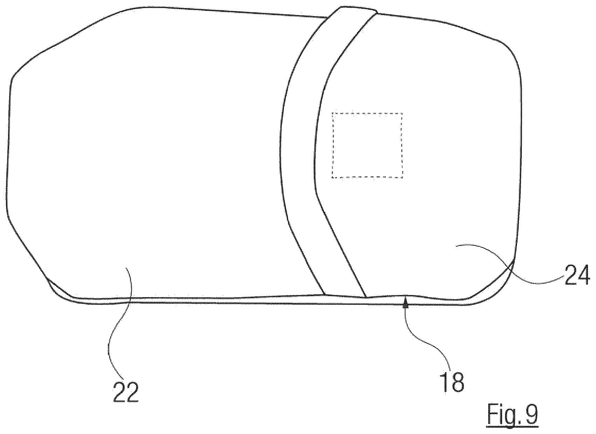

- Fig. 9: eine Vorderseite der Halterung;
- Fig. 10: eine Hinterseite der Halterung;

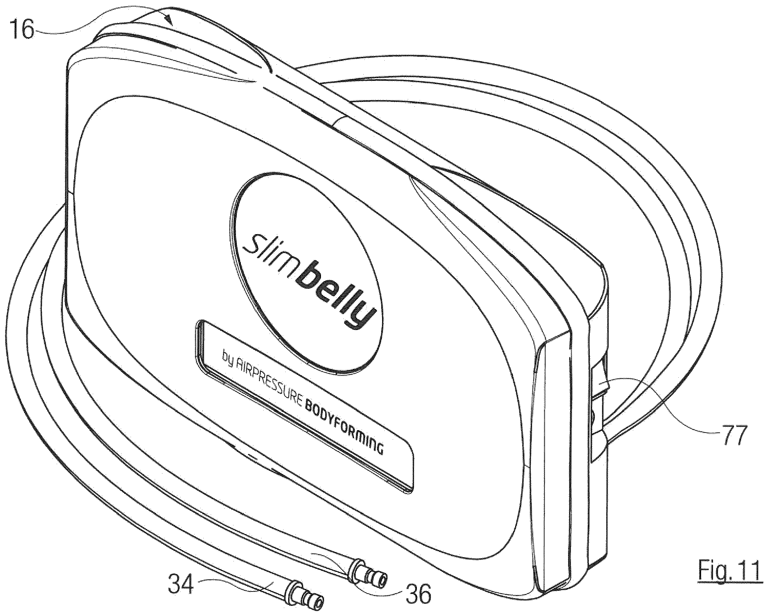

- Fig. 11: eine Perspektivansicht der Pumpeinrichtung mit zwei Leitungen;
- Fig. 12a-12h: verschiedenste Ansichten der Pumpeinrichtung;
- Fig. 13: eine Explosionsdarstellung der Pumpeinrichtung;
- Fig. 14: ein Innenteil der Pumpeinrichtung;
- Fig. 15a bis Fig. 15c: verschiedene Ansichten einer Ladevorrichtung;
- Fig. 16a und Fig. 16b: Schnitte durch die Ladevorrichtung wie in Fig. 15a angedeutet;
- Fig. 17: eine vergrößerte Darstellung einer Kontaktfläche und eines Kontaktstifts;
- Fig. 18a bis Fig. 18p: verschiedene perspektivische Ansichten eines Befestigungsmittels;
- Fig. 19a bis Fig. 19c: Draufsichten auf das Befestigungsmittel;

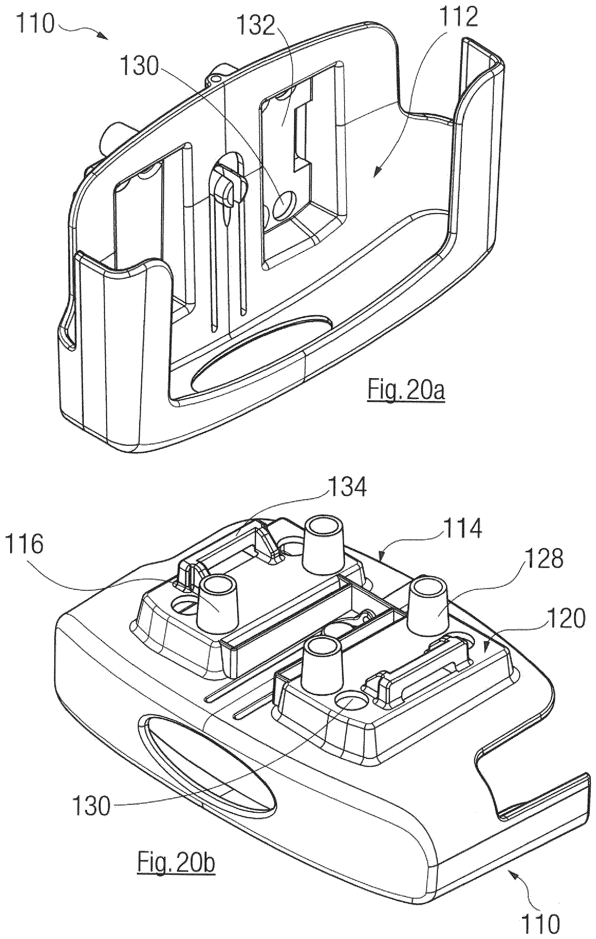

- Fig. 20a und Fig. 20b: weitere perspektivische Ansichten des Befestigungsmittels;
- Fig. 21: eine Ladevorrichtung mit einer Anbringungseinrichtung; und
- Fig. 22: ein vergrößerter Ausschnitt aus Fig. 21, der eine Erkennungseinrichtung zeigt.

Die erfindungsgemäße Vorrichtung 10a dient zur Intensivierung der Fettverbrennung in einem Körperteil 110a einer Person 100a. Der Körperteil 110a umfasst im vorliegenden Fall das Gesäß und die Oberschenkel. Vorzugsweise weist die Person 100a dabei einen Puls im Fettverbrennungsbereich auf. Der Fettverbrennungspuls liegt in der Regel bei 60 % bis 70 % der maximalen Herzfrequenz der trainierenden Person 100a. In diesem Bereich bezieht der Körper seine Energie vor allem aus dem Muskelfett und den freien Fetten im Blut. Der Fettverbrennungspuls hängt demnach insbesondere von dem Geschlecht und dem Alter der trainierenden Person 100a ab. So hat eine weibliche Person im Alter von 25 Jahren in der Regel einen Fettverbrennungspuls zwischen 121 und 141 Herzschlägen pro Minute.

Die Vorrichtung 10a gemäß dem ersten Ausführungsbeispiel weist zwei Druckkammern 20a, welche auch als erste Druckkammer 26 und als zweite Druckkammer 28 bezeichnet werden, auf, die mit Fluid beaufschlagbar sind. Das Fluid wird mittels einer Pumpeinrichtung 16 in die Druckkammer 20a eingebracht. Weiterhin umfasst die Vorrichtung gemäß dem ersten Ausführungsbeispiel eine Steuereinrichtung 99 zum Steuern der Pumpeinrichtung 16. Eine Haltevorrichtung 30a dient zum Halten der Druckkammern 20a an dem Körperteil 110a. Die Druckkammern 20a sind lösbar mit der Haltevorrichtung 30a verbindbar. Die Druckkammern 20a sind schlauchförmig ausgebildet. Die Vorrichtung kann eine figurlich nicht wiedergegebene Tragevorrichtung umfassen, die dazu dient, die Pumpeinrichtung 16 an dem Körper der Person 100a anzulegen.

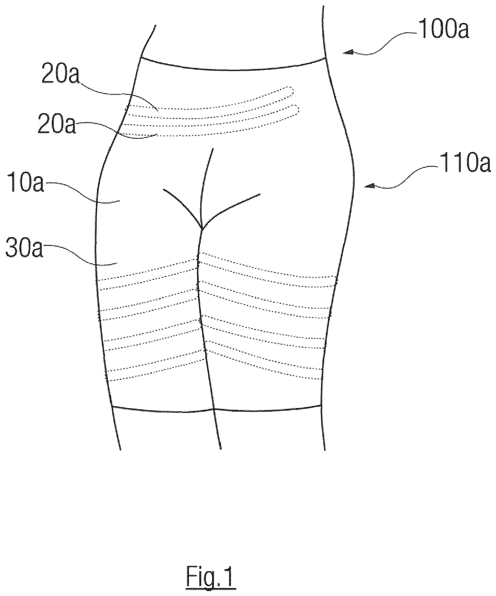

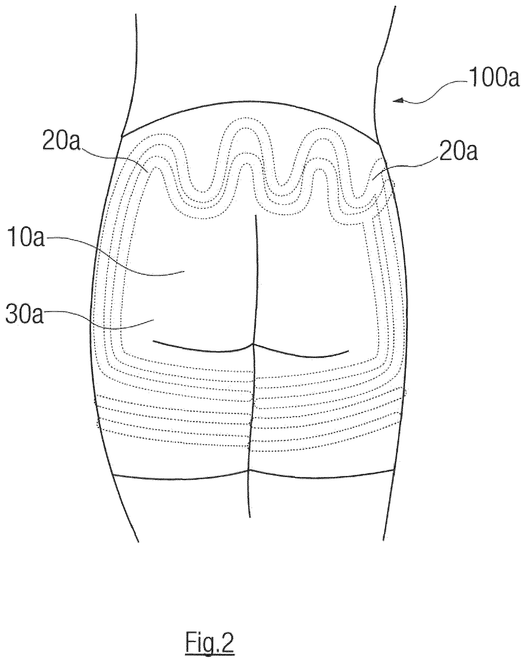

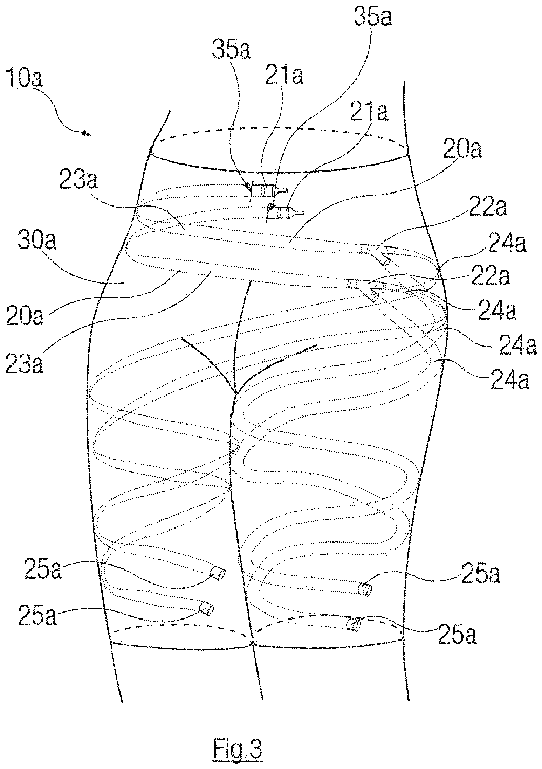

Wie die Fign. 1 und 2 zu erkennen geben, weist die Vorrichtung 10a gemäß dem ersten Ausführungsbeispiel zwei parallel verlaufende Druckkammern 20a auf, die sich entlang einer Längsrichtung erstrecken. Beide Druckkammern 20a verlaufen dabei entlang des Körperteils 110a. Die Druckkammern 20a gemäß dem ersten Ausführungsbeispiel verlaufen dabei linear ohne Abzweigung. Die Druckkammern 20a weisen jeweils an einem ihrer Enden eine Anschlusseinrichtung 21 a und an dem anderen Ende eine Abschlusseinrichtung 25a auf, wie dies in Fig. 3 veranschaulicht ist.

Die Vorrichtung 10a nach dem zweiten Ausführungsbeispiel ist in Fig. 3 wiedergegeben. Die Vorrichtung 10a weist zwei Druckkammern 20a auf, die jeweils in einen Basisabschnitt 23a und zwei Zweigabschnitte 24a aufgeteilt sind. Zwischen dem Basisabschnitt 23a und den Zweigabschnitten 24a ist eine Abzweigeinrichtung 22a angeordnet, die die Druckkammern 20a in die zwei Zweigabschnitte 24a aufteilt. An dem von der Abzweigeinrichtung 22a distal angeordneten Ende des Basisabschnitts 23a ist eine Anschlusseinrichtung 21 a angeordnet. Die Pumpeinrichtung 16 ist mittels der Anschlusseinrichtung 21 a an die Druckkammer 20a anschließbar. An den von der Abzweigeinrichtung 22a distal angeordneten Enden der Zweigabschnitte 24a ist jeweils eine Abschlusseinrichtung 25a angeordnet, die den schlauchförmigen Zweigabschnitt 24a an dessen Ende abschließt.

Die Anschlusseinrichtung 21 a umfasst vorzugsweise ein figurlich nicht wiedergegebenes Reduktionselement. Das Reduktionselement umfasst einen Verbindungsbereich und einen Anschlussbereich. Das Reduktionselement ist vorzugsweise aus Silikon gefertigt.

In dem Ausführungsbeispiel gemäß Fig. 3 verlaufen die Basisabschnitte 23a der Druckkammern 20a oberhalb der Hüftlinie der Person 100a. In einem weiteren, figurlich nicht wiedergegebenen Ausführungsbeispiel, geht die Anschlusseinrichtung direkt in die Abzweigeinrichtung über. Vorzugsweise ist dabei die Abschlusseinrichtung einteilig mit der Abzweigeinrichtung ausgebildet.

Die Zweigabschnitte 24a der jeweiligen Druckkammern 20a verlaufen jeweils um eines der Beine der Person 100a. Die Druckkammern 20a sind über Einführöffnungen 35a in die Haltevorrichtung 30a einführbar.

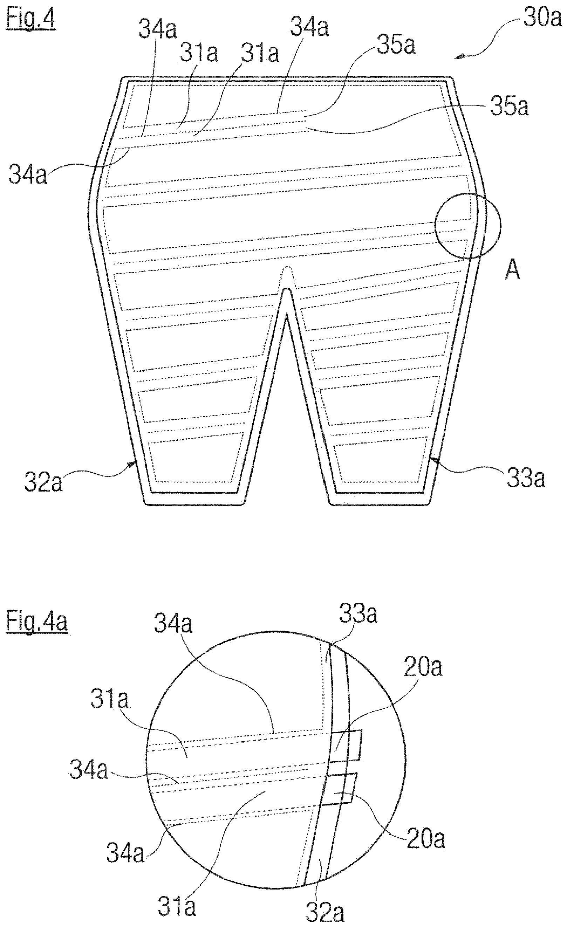

Fig. 4 zeigt eine Haltevorrichtung 30a nach dem zweiten Ausführungsbeispiel. Die in Fig. 4 wiedergegebene Haltevorrichtung 30a ist als Hose ausgebildet und ist auf links gewendet dargestellt. Die Haltevorrichtung 30a setzt sich aus einer ersten Lage 32a und einer zweiten Lage 33a zusammen. Zwei Kanäle 31 a verlaufen zwischen der ersten Lage 32a und der zweiten Lage 33a und dienen zur Aufnahme der Druckkammern 20a. Die erste Lage 32a und die zweite Lage 33a sind mittels wenigstens einer Naht 34a miteinander verbunden. Der Kanal 31 a ist durch die erste Lage 32a, die zweite Lage 33a und die Naht 34a umgrenzt.

Zwei Kanäle 31 a verlaufen im Wesentlichen parallel zueinander. Die Haltevorrichtung 30a ist vorzugsweise aus einem elastischen, textilen und atmungsaktiven Werkstoff gefertigt.

Die Tragevorrichtung ist vorzugsweise aus einem elastischen, textilen und atmungsaktiven Werkstoff gefertigt.

Der in Fig. 4a vergrößert wiedergegebene Ausschnitt der Fig. 4 zeigt, wie die Druckkammern 20a entlang der Kanäle 31 a verlaufen. Auf den Außenseiten der auf links gewendeten Haltevorrichtung 30a liegen die Druckkammern 20a frei und sind deshalb in einfacher Weise entlang des gesamten Kanals verschiebbar und positionierbar. Entlang dieser Stellen gelangt die Druckkammer 20a, wenn die Haltevorrichtung wieder auf rechts gedreht wird, in direkten Kontakt mit dem Körperteil 110a.

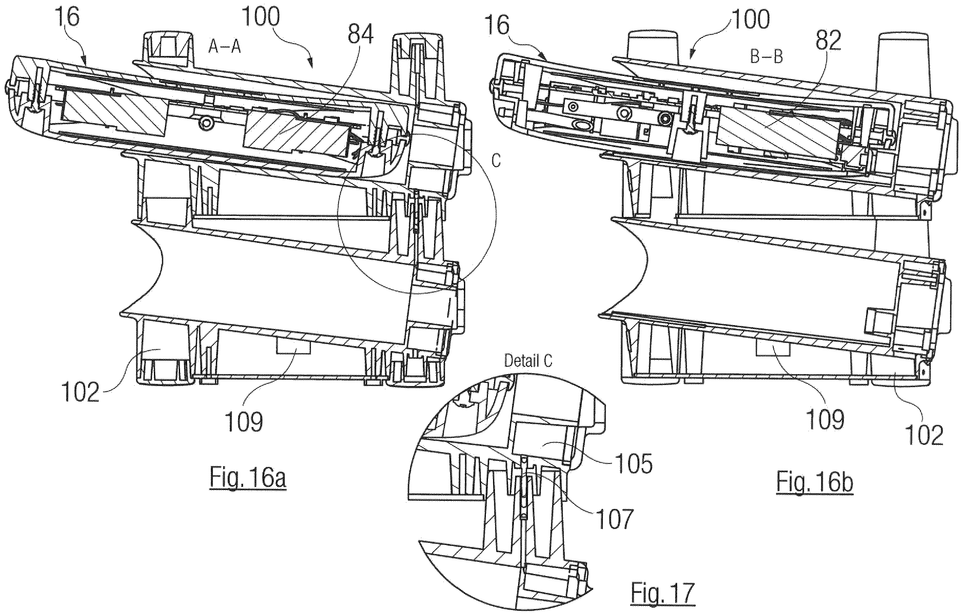

Die Pumpeinrichtung 16 umfasst, wie in Fig. 16 dargestellt, wenigstens einen Kompressor 84 und ein erstes Ventil 86a sowie ein zweites Ventil 86b. Zunächst wird das erste Ventil 86a geöffnet, welches mit der ersten Druckkammer 26 verbunden ist, und der Kompressor 84 wird betätigt, bis ein vorgegebener Druck erreicht wird. Der in einer ersten Druckkammer 26 der Druckkammer 20a befindliche Druck wird aufrechterhalten. Anschließend werden sowohl das erste Ventil 86a als auch das zweite Ventil 86b geöffnet, so dass der Druck, der in der ersten Druckkammer 26 vorherrscht sich dem Druck, der in einer zweiten Druckkammer 28 der Druckkammer 20a vorherrscht, angleicht. Anschließend wird das erste Ventil 86a wieder geschlossen und die zweite Druckkammer 28 wird mittels der Pumpeinrichtung 16 mit dem Fluid beaufschlagt. Dann wird das erste Ventil 86a wieder geöffnet, um einen Druckausgleich zwischen beiden Druckkammern 26, 28 zu schaffen. Danach wird das zweite Ventil 86b wieder verschlossen, und mit einem geöffneten ersten Ventil 86a beginnt der Zyklus erneut. Sowohl der Kompressor 84 als auch die Ventile 86a, 86b werden mittels einer Steuereinrichtung 99 gesteuert.

Vorzugsweise wird die erste Druckkammer 26 während 2 bis 10 Sekunden mit Druck beaufschlagt. Der Druck wird anschließend vorzugsweise für 10 bis 30 Sekunden aufrechterhalten. Im anschließenden Schritt wird der Druck in der zweiten Druckkammer 20a während 2 bis 10 Sekunden erhöht und während 10 bis 20 Sekunden aufrechterhalten.

Vorzugsweise werden die Druckkammern 20a mit einem Druck von 0,3 bar bis 0,8 bar, vorzugsweise mit einem Druck von 0,6 bar abwechselnd beaufschlagt.

Die erfindungsgemäße Vorrichtung in Form einer Hose zeichnet sich durch folgende Vorteile aus:

Die Hose ist doppellagig ausgeführt, wobei die beiden Lagen derart miteinander vernäht sind, dass zwei zueinander parallele, voneinander getrennte Kanäle entstehen.

Diese Kanäle umschlingen spiralartig den Hüftbereich und die Beine. Die Auslegung der Schlauchkanäle erfolgt derart, dass eine möglichst große Abdeckung des Bein- und Pobereiches erzielt wird. Durch von außen nicht sichtbare Öffnungen in der inneren Lage an den Bein-Außenseiten und Bein-Innenseiten können die Schläuche eingefädelt werden. An den erforderlichen Stellen werden Verteiler-, End- und Anfangsstücke in die Schläuche eingesetzt.

Stark vereinfacht besteht eine Hose aus einem vorderen Teil und einem hinteren Teil. In unserem Fall ist jeder dieser Teile doppellagig ausgeführt, wobei die beiden Lagen derart miteinander vernäht sind, dass zwei zueinander parallele, voneinander getrennt Kanäle entstehen. Die Vernähung ist an geeigneter Stelle unterbrochen, um ein geradliniges Einfädeln der Schläuche auch nach der Fertigstellung der Hose mit einem einfachen Werkzeug möglich zu machen. An den nicht vernähten Stellen treten die Schläuche aus den Schlauchkanälen heraus und haben an diesen Stellen direkten Hautkontakt.

Die Hose besteht aus zwei schnittmäßig identischen Lagen von ausreichender Elastizität. Die innere Lage ist mit der äußeren Lage entlang grundsätzlich eher geraden Linien vernäht. Die dermaßen vorbereiteten Schnitte werden zu einer Hose vernäht. Es entsteht eine Hose mit Kanälen oder mit Pfaden für die Schläuche. Diese Pfade weisen an den Hauptnähten der Schnitt-Bestandteile kleine Öffnungen auf. In umgedrehtem Zustand kann nun der Schlauch in die Pfade eingeführt werden. Die Öffnungen vermeiden, dass spiralig gefädelt werden müsste, was praktisch nicht sinnvoll umsetzbar wäre.

Silikonschläuche von dünner Wandstärke und passendem Durchmesser umschließen wellig beziehungsweise spiralförmig die gewünschten Körperpartien und es wird rund ums Bein, auch innen, eine Massagewirkung erzielt. Die Luftkammern werden auf ein Produkt in Meterware reduziert. Der Silikonschlauch ist elastisch und kann sich vor allem axial stark dehnen.

Dadurch wird eine Einbringung in elastisches Hosenmaterial möglich, was wiederum die Problematik der Passform entspannt.

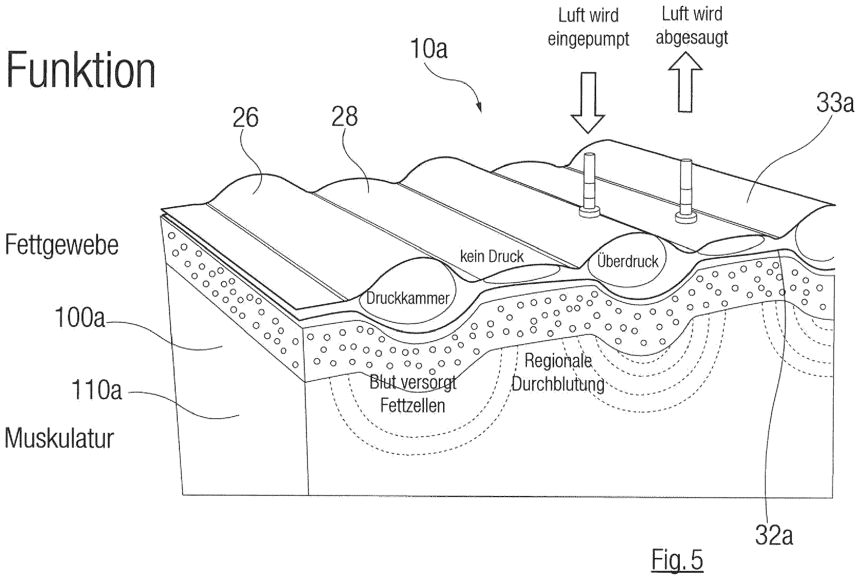

In Fig. 5 ist die Anordnung des Fitnessgeräts an dem Körperteil der Person 100a dargestellt. Wird nun die erste Druckkammer 26 mittels der Pumpeinrichtung 16 beaufschlagt und gleichzeitig Luft aus der zweiten Druckkammer 28 gesaugt oder nicht mit Druck beaufschlagt, entstehen Bereiche an dem Körperteil 110a, die mit Druck beaufschlagt werden, und Bereiche, an denen kein Druck auf das Körperteil 110a ausgeübt wird. Durch abwechselndes Beaufschlagen und Entpumpen der ersten 26 und zweiten Druckkammer 28 kann so die Durchblutung in dem Körperteil 110a angeregt werden. Es sind verschiedenste Pumpzyklen für die erste 26 und zweite Druckkammer 28 denkbar, die sich insbesondere in der Zeitspanne und Frequenz der Druckausübung auf das Körperteil 110a unterscheiden.

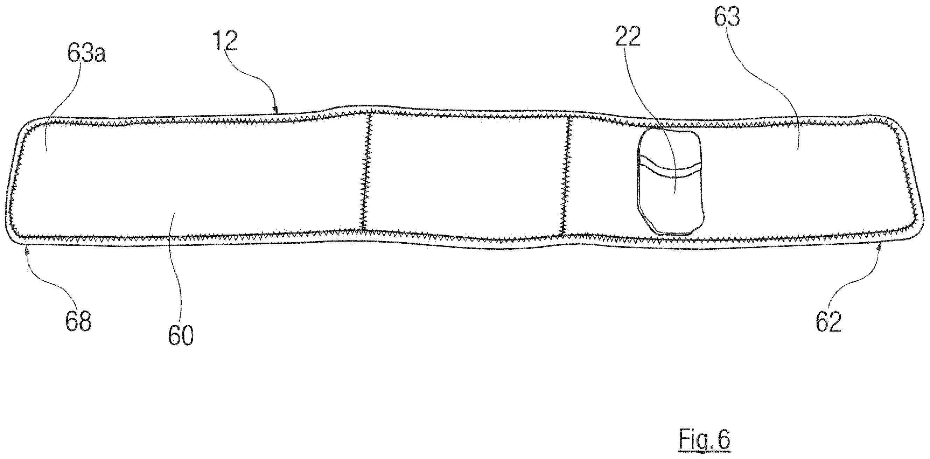

Fig. 6 zeigt eine Außenseite einer Tragevorrichtung 12. An der Tragevorrichtung 12 ist die Halterung 22 befestigt. Die Halterung 22 ist in einem geschlossenen Zustand dargestellt. Die Tragevorrichtung 12 weist einen Grundkörper 60 auf, der bis auf einen Mittelbereich an der Außenseite mit einem Flauschband 63 ersehen ist. Insbesondere an einem zweiten Ende 62 des Grundkörpers 60 ist ein Flauschband 63 vorgesehen. An einem ersten Ende 68 und an dem Mittelbereich ist ein weiteres Flauschband 63a vorgesehen. Hakenband 69 und Flauschband 63 sowie weiteres Flauschband 63a bilden ein Verbindungsmittel.

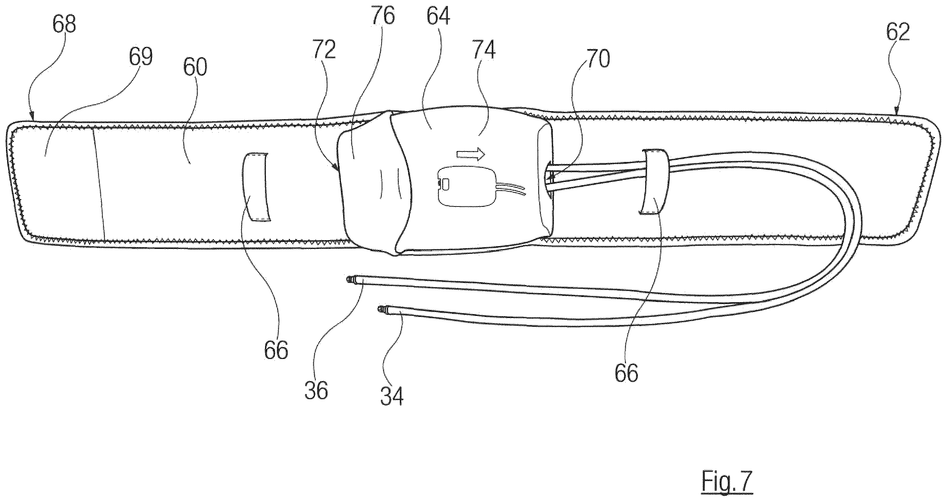

Wie aus Fig. 7 zu erkennen ist, hat der Grundkörper 60 an der Innenseite ein Haltemittel 64 und zwei Laschen 66. An der ersten Seite 68 des Grundkörpers 60 ist das Hakenband 69 vorgesehen. Das Haltemittel 64 weist eine erste 70 und zweite Öffnung 72 auf, wobei aus der ersten Öffnung 70 die erste Leitung 34 und die zweite Leitung 36 aus dem Haltemittel 64 herausgeführt werden können. Über die zweite Öffnung 72 kann ein Schalter 77 der Pumpeinrichtung 16 bedient werden. Die Laschen 66 dienen zum Halten und Führen der ersten 34 und zweiten Leitung 36.

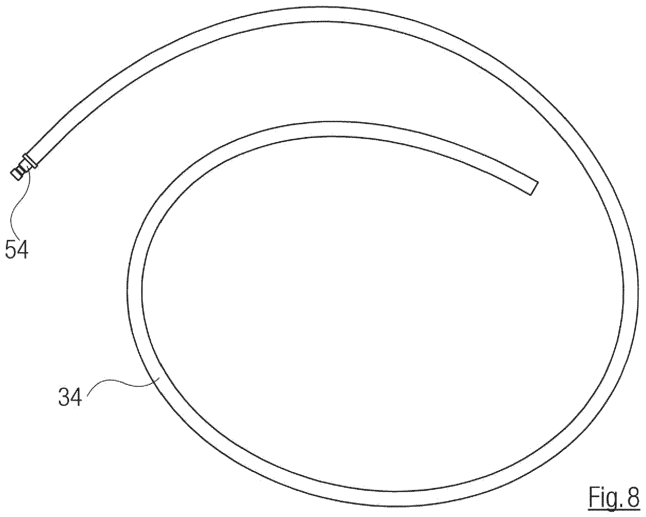

Das Haltemittel 64 ist fest an dem Grundkörper 60 angebracht und als eine Tasche 74 ausgebildet. Die Tasche hat einen Verschluss 76, mittels dem die Tasche 74 geschlossen werden kann. Wie dies gut in Fig. 8 zu erkennen ist, weisen die erste und zweite Leitung 34, 36 jeweils ein Endstück 54 in Form eines Steckers für die Anschlusseinrichtungen 30, 32 auf.

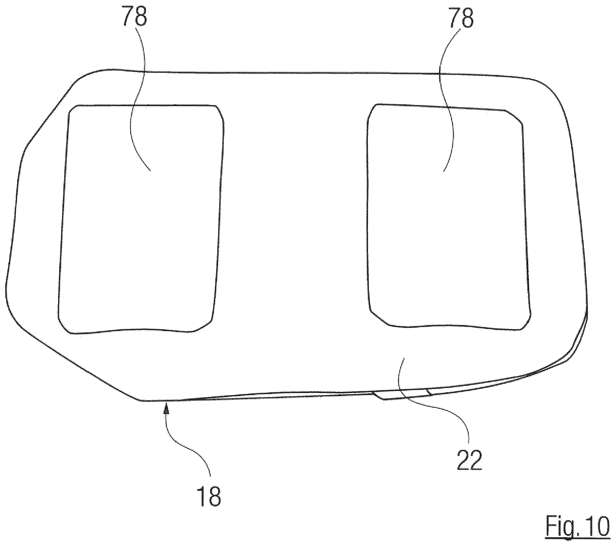

Wie dies gut in Fig. 10 ersichtlich ist, hat die Halterung 18 an der Rückseite zwei Hakenstreifen 78 an dem Beutel 22, mittels denen die Halterung 18 an dem Flauschband 63a des Grundkörpers 60 angebracht werden kann.

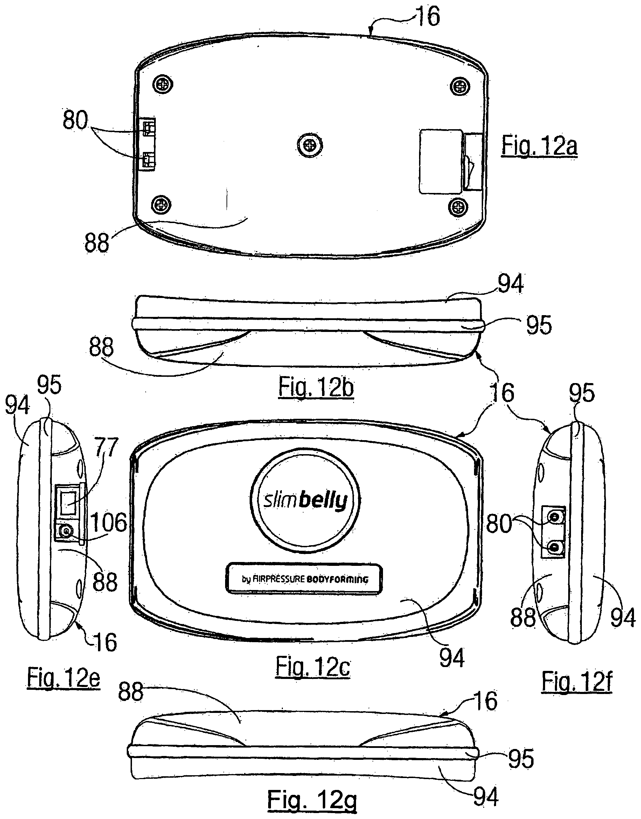

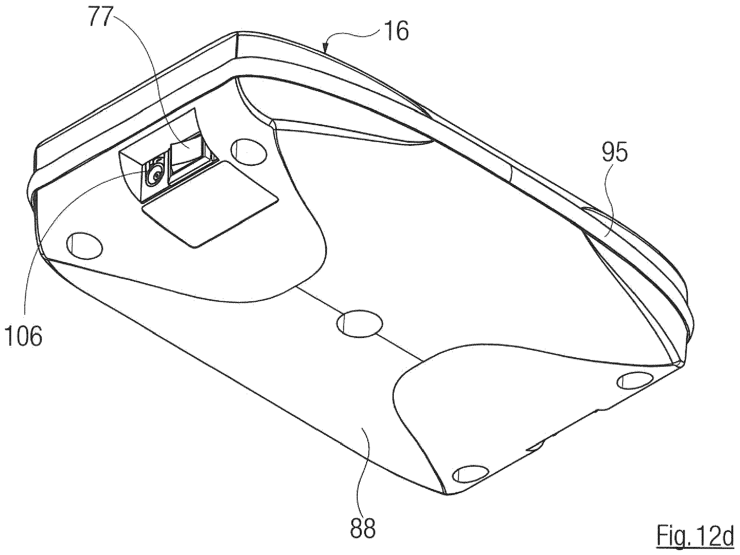

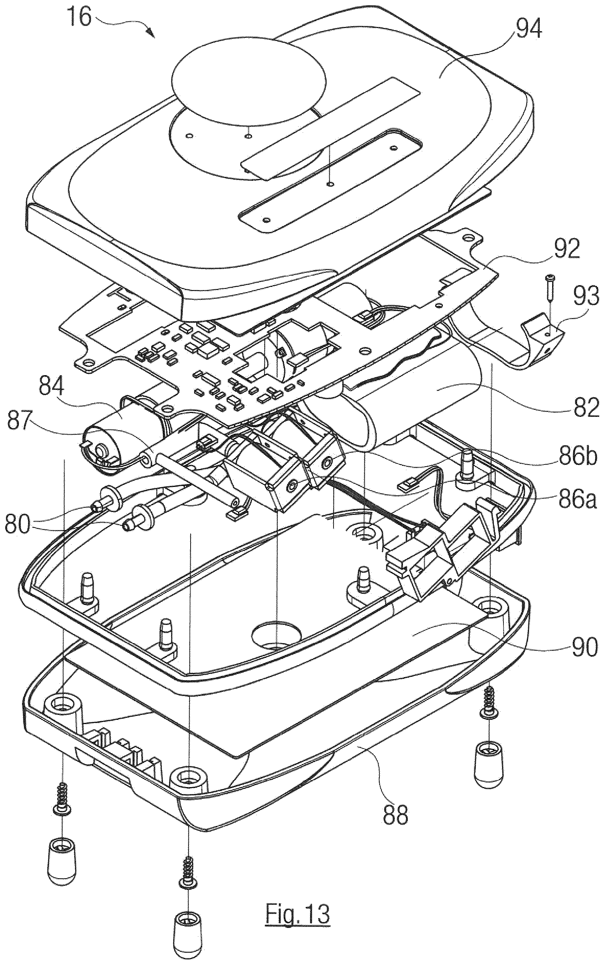

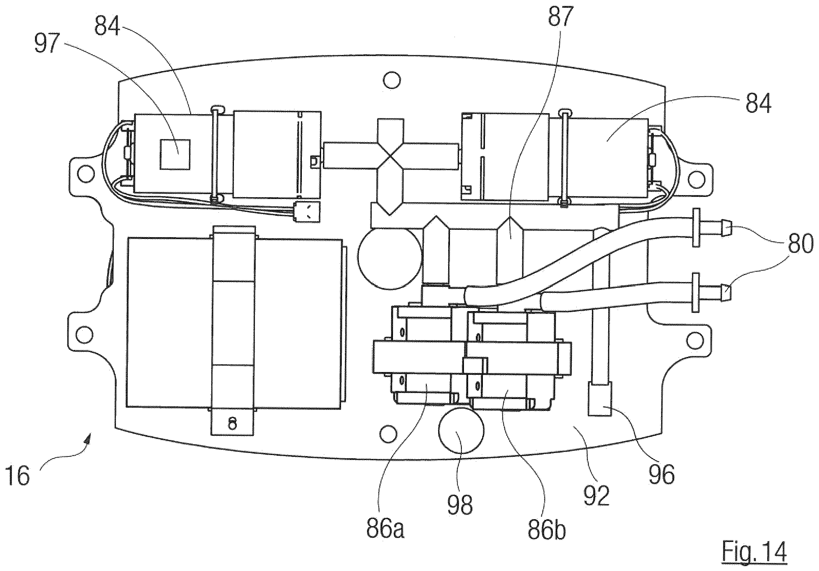

Fign. 12a bis 12h zeigen jeweils Seitenansichten der Pumpeneinrichtung 16. Die Pumpeinrichtung 16 hat zwei Anschlüsse 80 und einen Schalter 77. Die erste 34 und zweite Leitung 36 werden mit den Anschlüssen 80 verbunden. Die Pumpeinrichtung 16 hat, wie es gut in Fign. 13 und 14 ersichtlich ist, eine Batterie 82, zwei Kompressoren 84, die mit einem ersten Ventil 86a und einem zweiten Ventil über Rohre 87 in Fluidverbindung stehen. Die Kompressoren 84 sind über die Rohre 87 mit den Anschlüssen 80 verbunden, wobei die Ventile 86a und 86b die einzelnen Anschlüsse 80 öffnen oder schließen. Ferner weist die Pumpeinrichtung 16 ein Bodenteil 88, eine Dämpfungsschicht 90, eine Platine 92 und einen Deckel 94 auf. Die Platine 92 trägt die Kompressoren 84, die Batterie 82 und die Ventile 86a und 86b wie dies in Fig. 14 zu erkennen ist. Dazu werden Halteklammern 93 und/oder Kabelbinder verwendet. Die Platine 92 ist in einem umlaufenden Halterahmen 95, der in Fign. 12 zu erkennen ist, aus weichem Kunststoff eingehängt, welcher wiederum zwischen dem Bodenteil 88 und dem und dem Deckel 94 eingeklemmt ist. Zusätzlich ist sowohl im Bodenteil 88 als auch im Deckel 94 eine Dämpfungsschicht 90 aus Neopren eingelegt, um weitere Geräuschdämmung zu erzielen.

Wie in Fig. 14 zu erkennen ist, weist die Pumpeinrichtung 16 ferner eine Sensoreinrichtung 96 auf, die den Druck des Fluids in der ersten Leitung 34 und in der zweiten Leitung 36 misst. Die Sensoreinrichtung 96 ist mit der Steuereinrichtung 99, verbunden, um den Betrieb der Pumpeinrichtung 16 zu beenden, falls der in der ersten 34 und zweiten Leitung 36 gemessene Druck einen Grenzdruck erreicht oder der Grenzdruck nicht in einer vorgegebenen Zeitspanne erreicht wird. Die Steuereinrichtung 99 kann ein separates Bauteil auf der Platine 92 angeordnet sein. Alternativ kann die Steuereinrichtung 99 durch die Platine 92 selbst bereit gestellt sein. Die Steuereinrichtung 99 steuert die Pumpeinrichtung 16.

Wie dies ebenfalls in Fig. 14 zu erkennen ist, weist die Pumpeinrichtung 16 ferner eine Ladezustandserkennungseinrichtung 97 auf, die den Ladezustand der Batterie 82 misst. Ist der Ladezustand der Batterie 82 unter einem vorgegebenen Wert, wird ein Signal an eine Benachrichtigungseinrichtung 98 ausgegeben, die in der gezeigten Ausführungsform ein Lautsprecher ist. Diese gibt dann einen Summton aus.

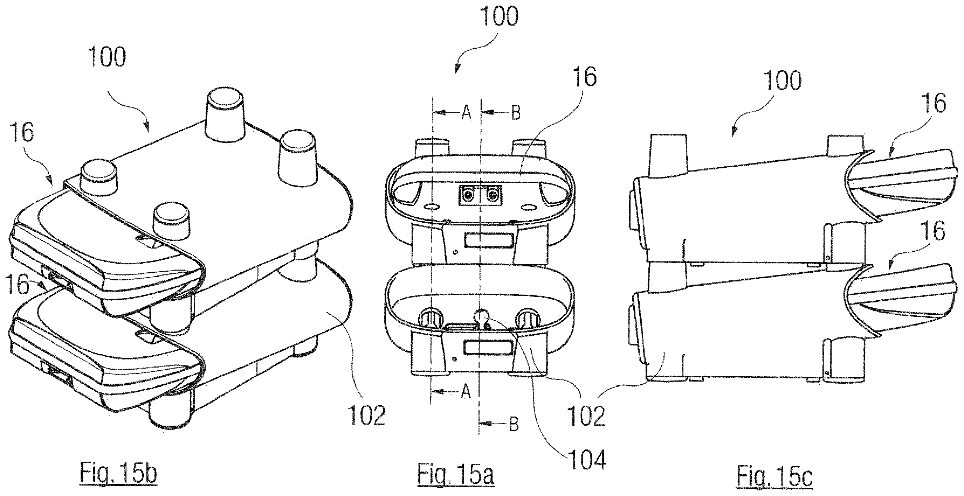

Wie in den Fign. 15a bis 15c ersichtlich, hat eine Ladevorrichtung 100 zwei Einschubeinrichtungen 102, in die jeweils eine Pumpeinrichtung 16 eingeschoben ist. Die Einschubeinrichtung 102 ist zu einer Horizontalen geneigt, so dass die Pumpeinrichtung 16 nicht aus der Einschubeinrichtung 102 herausrutschen kann. Die Einschubeinrichtungen 102 sind aufeinander angeordnet. In der Einschubeinrichtung 102 ist ein Gegenkontaktbereich 104 in Form eines Pins vorgesehen, wie dies aus Fig. 15a ersichtlich ist. Der Gegenkontaktbereich 104 berührt einen Kontaktbereich 106 der Pumpeinrichtung 16, welcher in Fign. 12d und 12e in Form einer Buchse zu erkennen ist. Kontaktbereich 106 und Gegenkontaktbereich 104 sind aus Metall hergestellt und stellen eine elektrische Verbindung zwischen einer nicht gezeigten Stromladevorrichtung und der Batterie 82 der Pumpeinrichtung 16 her.

Fig. 17 stellt die elektrische Verbindung zwischen den einzelnen Einschubeinrichtungen 102 dar. Dazu weist die Einschubeinrichtung 102 auf der unteren Seite einen Kontaktfläche 105 und auf der oberen Seite einen Kontaktstift 107 auf, die sich berühren, wenn zwei Einschubeinrichtungen 102 übereinander gestapelt sind.

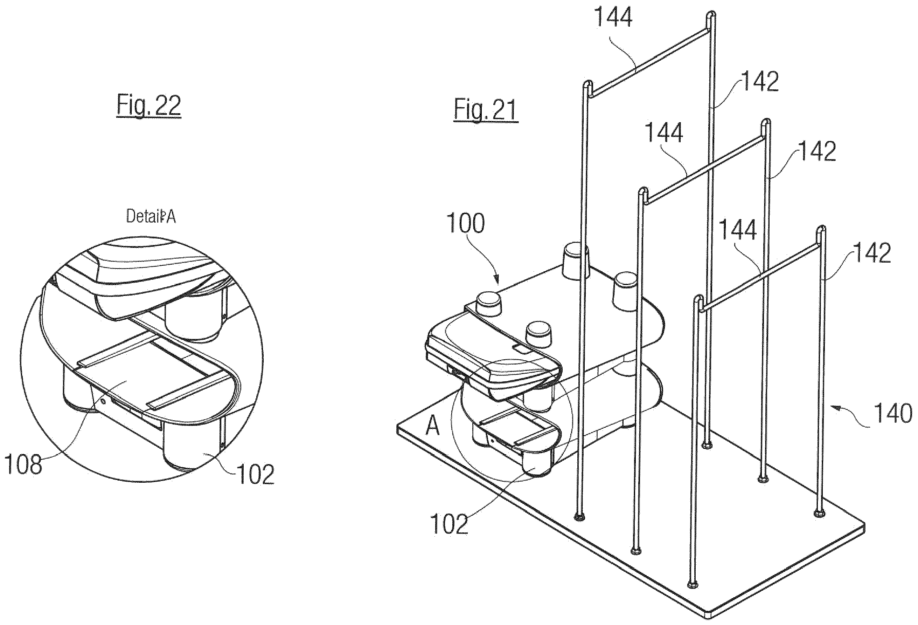

Wie dies insbesondere in Fig. 22 zu erkennen ist, weist die Ladevorrichtung 100 an jeder ihrer Einschubeinrichtungen 102 eine Erkennungseinrichtung 108 auf. Die Erkennungseinrichtung 108 ist in der gezeigten Ausführungsform als ein Kartenlesegerät ausgebildet, die einen Mitgliedsausweis in Form einer Karte als Identifizierungsmittel erkennt. Wird ein gültiges Identifizierungsmittel erkannt, wird ein Signal an eine in Fig. 16a und 16b gezeigte Sicherungseinrichtung 109 weitergegeben. Die Sicherungseinrichtung 109 hintergreift die Pumpeinrichtung 16, so dass sie nicht aus der Einschubeinrichtung 102 herausgenommen werden kann, sofern kein Signal von der Erkennungseinrichtung 108 empfangen wird. Empfängt die Sicherungseinrichtung 109 ein Signal von der Erkennungseinrichtung 108, wird die Pumpeinrichtung 16 freigegeben, so dass der Verwender die Pumpeinrichtung 16 aus der Einschubeinrichtung 102 herausnehmen kann.

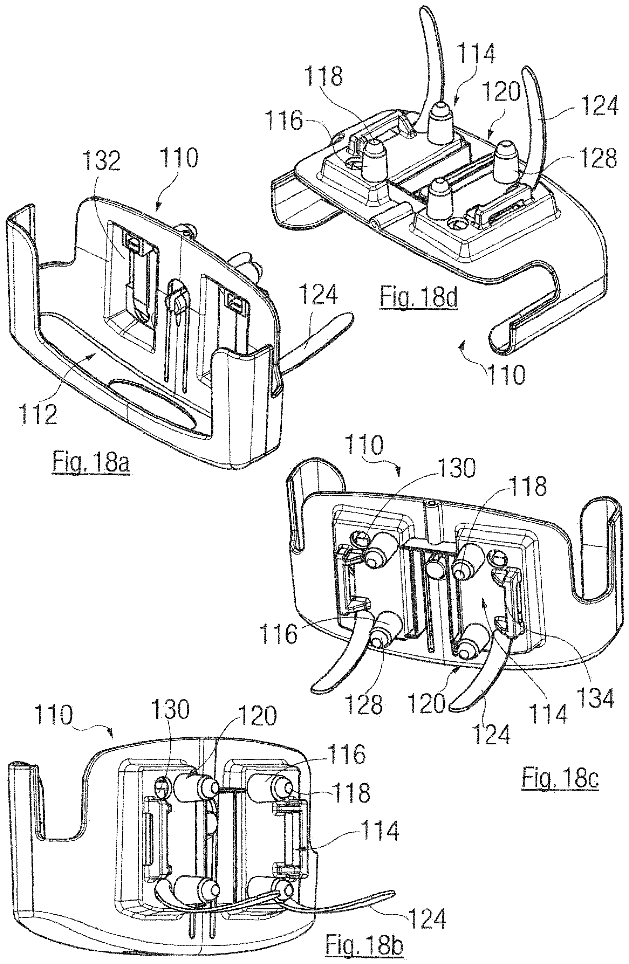

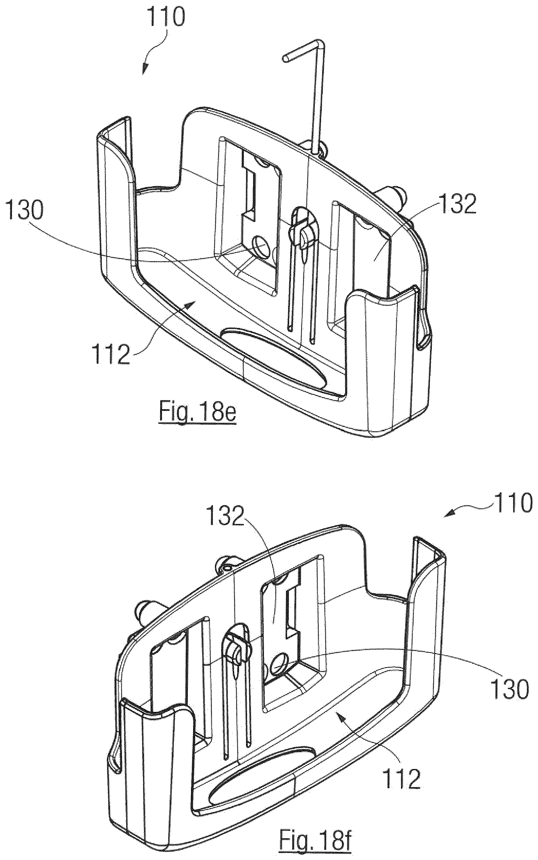

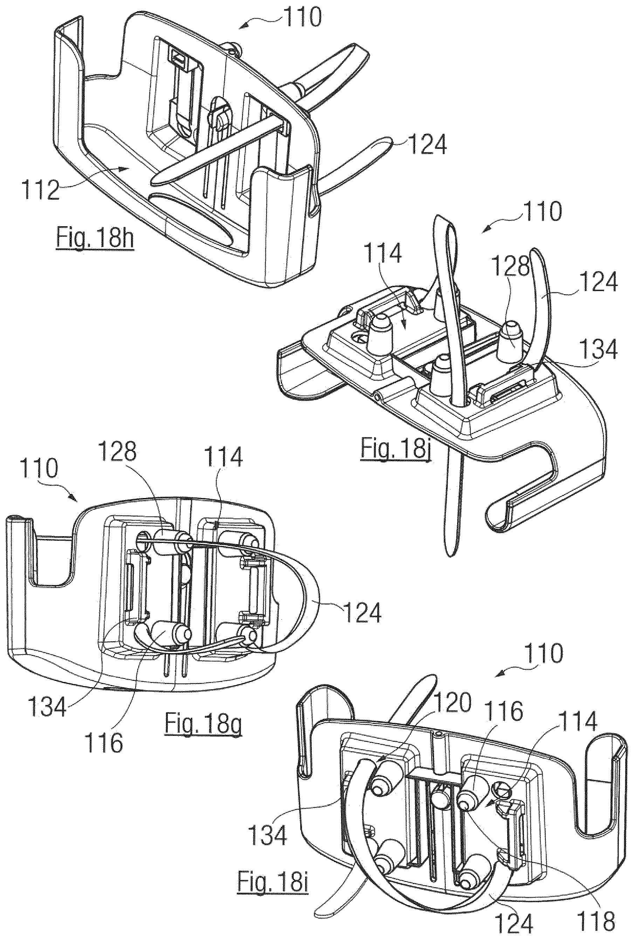

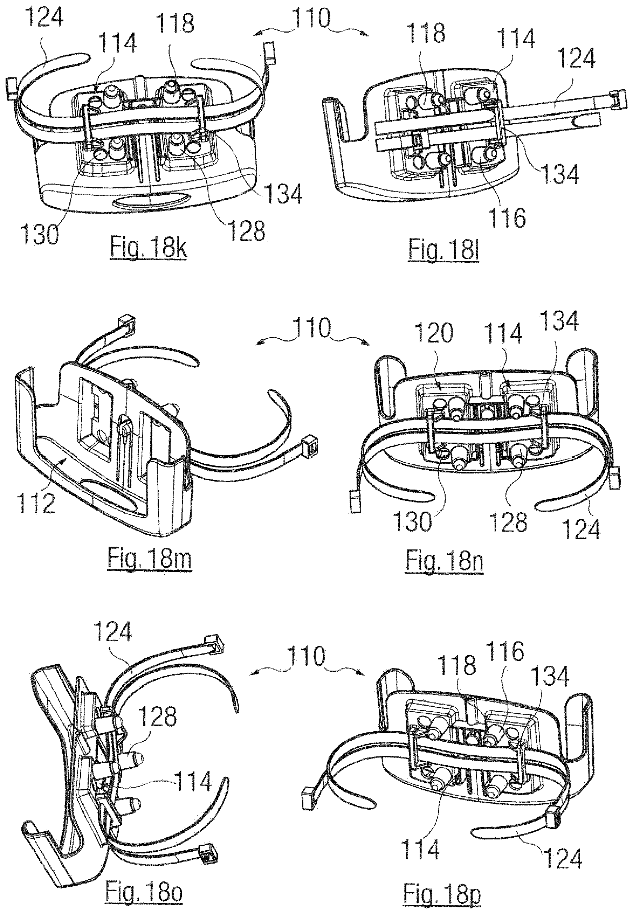

Wie dies in den Fig. 18a bis 18p ersichtlich ist, hat ein Befestigungsmittel 110 einen Haltebereich 112 und einen Befestigungsbereich 114. Der Haltebereich 112 ist in vertikaler Richtung oben offen, so dass die Pumpeinrichtung 16 von oben in den Befestigungsbereich 112 eingeführt werden kann. Die Innenabmessungen des Haltebereichs 112 sind an die Außenabmessungen der Pumpeinrichtung 16 angepasst, so dass die Pumpeinrichtung 16 in den Haltebereich 112 eingelegt werden kann, so dass die Pumpeinrichtung 16 sicher angeordnet werden kann.

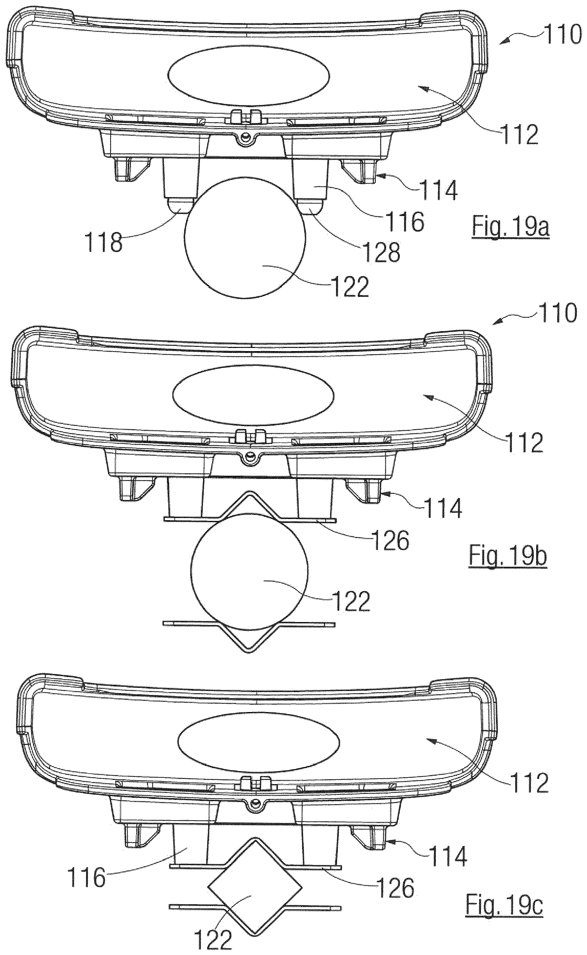

Der Befestigungsbereich 114 hat einen Grundabschnitt 116 und einen Kontaktabschnitt 118. Grundabschnitt 116 und Kontaktabschnitt 118 bilden einen Anlageabschnitt 120. Eine Stange 122 eines Geräts wird durch einen Fixierabschnitt 124 in Form eines Kabelbinders an den Anlageabschnitt 120 gepresst. Dazu weist der Befestigungsbereich 114 Löcher 130 auf, durch die der Fixierabschnitt 124 hindurch geführt werden kann. Der Anlageabschnitt 120 umfasst eine Anlagefläche 126, wie in den Fign. 19a bis 19c ersichtlich, oder als Anlagevorsprünge 128, wie in den Fign. 18a bis 18p und 19a ersichtlich. Die Anlagevorsprünge 128 sind als Gumminoppen ausgebildet. Je nach dem wie groß die Stange 122 ist, kann als Kontaktabschnitt 118 die Anlagefläche 126 oder die Anlagevorsprünge 128 in den Grundabschnitt 116 eingesteckt oder eingeschraubt werden. Durch Löcher 130 können die Fixierabschnitte 124 hindurchgeführt werden. Die Löcher 130 sind in Vertiefungen 132 des Haltebereichs 112 angeordnet, so dass auch besonders dicke Fixierabschnitte 124 verwendet werden können.

Die Vertiefungen 132 sind durch Verstärkungen 134 verstärkt, die auch eine Anlageabschnitt 120 bei horizontal angeordneten Stangen 122 bilden kann. Zudem bilden die Verstärkungen 134 einen Anlageabschnitt 120 zur Befestigung an vertikalen Stangen, wobei dieser insbesondere für Stangen mit großem Durchmesser geeignet ist. Die Verstärkungen 134 weisen zudem Öffnungen auf, durch die Fixierabschnitte 124 zur Fixierung hindurch geführt werden können. Mit Hilfe der Löcher 130 und der Verstärkungen 134 können die Fixierabschnitte 124 auf unterschiedliche Weise angebracht werden, um die Befestigung das Befestigungsmittel 110 an die vorliegende Situation anzupassen. Die verschiedenen Anbringungsmöglichkeiten der Fixierungsabschnitte 124 sind beispielhaft in Fign. 18a bis 18p dargestellt. Der Haltebereich 112 ist ferner so dimensioniert, dass er die Pumpeinrichtung 16 verspannungsfrei aufnehmen kann.

Der Ladevorrichtung 100 ist eine Anbringungseinrichtung 140 beigeordnet. Die Anbringungseinrichtung ist in der gezeigten Ausführungsform von Fig. 21 durch drei Ständer 142 bereitgestellt, die jeweils die Tragevorrichtung 12 oder den Druckgürtel 14 aufnehmen können. Dazu weist der Ständer 142 waagerechte Stangen 144 auf, über die die Tragevorrichtung 12 oder der Druckgürtel 14 gelegt werden kann.

**Bezugszeichenliste**

| | | | |
|---|---|---|---|
| 10a | Vorrichtung | 24 | Deckel |
| | | 26 | erste Druckkammer |
| 20a | Druckkammer | 28 | zweite Druckkammer |
| 21a | Anschlusseinrichtung | | |
| 22a | Abzweigeinrichtung | 30 | erste Anschlusseinrichtung |
| 23a | Basisabschnitt | 32 | zweite Anschlusseinrichtung |
| 24a | Zweigabschnitt | 34 | erste Leitung |
| 25a | Abschlusseinrichtung | 36 | zweite Leitung |
| | | 38 | Verschweißung |
| 30a | Haltevorrichtung | | |
| 31a | Kanal | 40 | erster Endbereiche |
| 32a | erste Lage | 41 | Hakenbereich |
| 33a | zweite Lage | 42 | erster Basisabschnitt |
| 34a | Naht | 44 | erster Zeigabschnitt |
| 35a | Einführöffnung | 46 | zweiter Basisabschnitt |
| | | 48 | zweiter Zweigabschnitt |
| 100a | Person | 50 | zweiter Endbereich |
| 110a | Körperteil | 51 | Flauschbereich |
| 10 | Fitnessgerät | 60 | Grundkörper |
| 12 | Tragevorrichtung | 62 | zweites Ende |
| 14 | Druckgürtel | 63 | Flauschband |
| 16 | Pumpeinrichtung | 63a | weiteres Flauschband |
| 18 | Halterung | 64 | Haltemittel |
| | | 66 | Lasche |
| 20 | Gegenstand | 68 | erstes Ende |
| 22 | Beutel | 69 | Hakenband |
| | | 105 | Kontaktfläche |
| 70 | erste Öffnung | 106 | Kontaktbereich |
| 72 | zweite Öffnung | 107 | Kontaktstift |
| 74 | Tasche | 108 | Erkennungseinrichtung |
| 76 | Verschluss | 109 | Sicherungseinrichtung |
| 77 | Schalter | | |
| 78 | Hakenstreifen | 110 | Befestigungsmittel |
| | | 112 | Haltebereich |
| 80 | Anschluss | 114 | Befestigungsbereich |
| 82 | Batterie | 116 | Grundabschnitt |
| 84 | Kompressor | 118 | Kontaktabschnitt |
| 86a | erstes Ventil | | |
| 86b | zweites Ventil | 120 | Anlageabschnitt |
| 87 | Rohr | 122 | Stange |
| 88 | Bodenteil | 124 | Fixierabschnitt |
| | | 126 | Anlageflächen |
| 90 | Verbindungsabschnitt | 128 | Anlagevorsprung |
| 92 | Platine | | |
| 93 | Halteklammer | 130 | Loch |
| 94 | Deckel | 132 | Vertiefung |
| 95 | Halterahmen | 134 | Verstärkung |
| 96 | Sensoreinrichtung | 140 | Anbringungseinrichtung |
| 97 | Ladezustandserkennungseinrichtung | 142 | Ständer |
| | | 144 | waagerechte Stange |
| 98 | Benachrichtigungseinrichtung | | |
| 99 | Steuereinrichtung | | |
| 100 | Ladevorrichtung | | |
| 102 | Einschubeinrichtung | | |
| 104 | Gegenkontaktbereich | | |

## Patentansprüche

1. Fitnessgerät, umfassend
wenigstens eine mit einem Fluid beaufschlagbare Druckkammer (20a), die geeignet ist, an einem Körperteil (110a) einer Person (100a) anzuliegen;
eine Pumpeinrichtung (16), die mit der Druckkammer (20a) verbunden und geeignet ist, die Druckkammer (20a) mit dem Fluid zu beaufschlagen;
eine Steuereinrichtung (99) zum Steuern der Pumpeinrichtung (16) und
eine in der Gestalt eines Bekleidungsstücks ausgebildete und an das Körperteil (110a) anlegbare Haltevorrichtung (30a) zum Halten der Druckkammer (20a) an dem Körperteil (110a), die einen Kanal (31 a) aufweist;
wobei die Druckkammer (20a) in Form eines sich um das Körperteil (110a) herumschlingenden Schlauches ausgebildet ist, der in den Kanal (31 a) eingeführt ist;
wobei die Haltevorrichtung (30a) wenigstens eine erste Lage (32a) und wenigstens eine zwischen dem Körperteil (110a) und der Druckkammer (20a) anzuordnende zweite Lage (33a) aufweist, zwischen denen der Kanal (31a) verläuft, und
wobei die zweite Lage (33a) dehnbar und die erste Lage (32a) dicker als die zweite Lage (33a) ausgestaltet ist, so dass die zweite Lage (33a) einem aufgebauten Druck, der durch die Druckkammer (20a) auf das Körperteil (110a) ausgeübt wird, nachgibt, wohingegen die erste Lage (32a) die Ausbreitung des Drucks begrenzt.

2. Fitnessgerät nach Anspruch 1, **dadurch gekennzeichnet, dass** die Druckkammer (20a) einen annähernd kreisförmigen Querschnitt aufweist, wobei vorzugsweise die Druckkammer (20a) aus Silikon gefertigt ist.

3. Fitnessgerät nach Anspruch 1 oder 2, **dadurch gekennzeichnet, dass** die Druckkammer (20a) eine Anschlusseinrichtung (21 a) und/oder wenigstens eine Abschlusseinrichtung (25a) aufweist.

4. Fitnessgerät nach einem der Ansprüche 1 bis 3, **dadurch gekennzeichnet, dass** die Druckkammer (20a) einen Basisabschnitt (23a) und wenigstens zwei Zweigabschnitte (24a) aufweist, wobei zwischen Basisabschnitt (23a) und Zweigabschnitten (24a) eine Abzweigeinrichtung (22a) angeordnet ist, die den Basisabschnitt (23a) und die Zweigabschnitte (24a) miteinander verbindet.

5. Fitnessgerät nach einem der Ansprüche 1 bis 4, **dadurch gekennzeichnet, dass** der Durchmesser der Druckkammer (20a) und/oder des Basisabschnitts (23a) und/oder des Zweigabschnitts (24a) zwischen 10 mm und 40 mm, vorzugsweise zwischen 20 mm und 30 mm, beträgt.

6. Fitnessgerät nach einem der Ansprüche 1 bis 5, **dadurch gekennzeichnet, dass** die Wandstärke der Druckkammer (20a) und/oder des Basisabschnitts (23a) und/oder des Zweigabschnitts (24a) zwischen 0,1 mm und 2 mm, vorzugsweise zwischen 0,2 mm und 1 mm, weiterhin vorzugsweise ca. 0,5 mm, beträgt.

7. Fitnessgerät nach einem der Ansprüche 1 bis 6, **dadurch gekennzeichnet, dass** die Haltevorrichtung (30a) aus einem elastischen Werkstoff, insbesondere aus einem textilen und vorzugsweise atmungsaktiven Material, gefertigt ist.

8. Fitnessgerät nach Anspruch 7, **dadurch gekennzeichnet, dass** die erste Lage (32a) und die zweite Lage (33a) aus dem textilen Material gefertigt sind.

9. Fitnessgerät nach Anspruch 8, **dadurch gekennzeichnet, dass** der Kanal (31 a) durch eine Naht (34a), die den Kanal (31 a) umgrenzt und die erste Lage (32a) und die zweite Lage (33a) miteinander verbindet, gebildet ist.

10. Fitnessgerät nach einem der Ansprüche 1 bis 9, **dadurch gekennzeichnet, dass** das Bekleidungsstück eine Hose ist.

11. Fitnessgerät nach einem der Ansprüche 1 bis 10, **gekennzeichnet durch** zwei Druckkammern (20a), wobei die Pumpeinrichtung (16) geeignet ist, die Druckkammern (20a) abwechselnd mit dem Fluid zu beaufschlagen.

## Claims

1. Fitness device, comprising:
at least one pressure chamber (20a) which is applicable with a fluid and which is suitable for fitting to a body part (110a) of a person (100a);
a pumping means (16) which is connected with the pressure chamber (20a) and is suitable for applying the fluid to the pressure chamber (20a);
a control means (99) for controlling the pumping means (16), and
a holding means (30a), which is designed in the shape of a piece of clothing and can be abutted against the body part (110), for holding the pressure chamber (20a) to the body part (110a), and which has a channel (31 a);
wherein the pressure chamber (20a) is designed in the shape of a tube entwining around the body part (110a) and is inserted into the channel (31 a);
wherein the holding means (30a) has at least one first layer (32a) and at least one second layer (33a) being arranged between the body part (110a) and the pressure chamber (20a), the channel (31 a) extending between the first layer (32a) and the second layer (33a); and
wherein the second layer (33a) is designed stretchable and the first layer (32a) is designed thicker than the second layer (33a) so that the second layer (33a) yields to a built up pressure, which is exerted by the pressure chamber (20a) onto the body part (110a), whereas the first layer (32a) limits the expansion of the pressure.

2. Fitness device according to claim 1, **characterised in that** the pressure chamber (20a) has an approximately circular cross section, wherein the pressure chamber (20a) is preferably fabricated from silicone.

3. Fitness device according to claim 1 or 2, **characterised in that** the pressure chamber (20a) has a connection means (21 a) and/or at least one closing means (25a).

4. Fitness device according to any one of claims 1 to 3, **characterised in that** the pressure chamber (20a) has a base portion (23a) and at least two branch portions (24a), wherein a branching means (22a) is arranged between the base portion (23a) and the branch portions (24a), which connects the base portion (23a) and the branch portions (24a).

5. Fitness device according to any one of claims 1 to 4, **characterised in that** the diameter of the pressure chamber (20a) and/or the base portion (23a) and/or the branch portion (24a) is between 10 mm and 40 mm, preferably between 20 mm and 30 mm.

6. Fitness device according to any one of claims 1 to 5, **characterised in that** the wall thickness of the pressure chamber (20a) and/or the base portion (23a) and/or the branch portion (24a) is between 0.1 mm and 2 mm, preferably between 0.2 mm and 1 mm, further preferably ca. 1 mm.

7. Fitness device according to any one of claims 1 to 6, **characterised in that** the holding means (30a) is fabricated from an elastic material, in particular from a textile and preferably breathable material.

8. Fitness device according to claim 7, **characterised in that** the first layer (32a) and the second layer (33a) are fabricated from the textile material.

9. Fitness device according to claim 8, **characterised in that** the channel (31 a) is formed by a seam (34a) which defines the channel (31 a) and connects the first layer (32a) and the second layer (33a).

10. Fitness device according to claim 9, **characterised in that** the piece of clothing is a pair of trousers.

11. Fitness device according to any one of claims 1 to 10, **characterised by** two pressure chambers (20a), wherein the pumping means (16) is suitable for alternately applying the fluid to the pressure chambers (20a).

## Revendications

1. Appareil de fitness, comportant
au moins une chambre de pression (20a) susceptible d'être alimentée par un fluide et apte à épouser une partie corporelle (110a) d'une personne (100a) ;
un dispositif de pompage (16) qui est relié à la chambre de pression (20a) et qui est apte à alimenter la chambre de pression (20a) avec le fluide ;
un dispositif de commande (99) pour commander le dispositif de pompage (16) et un dispositif de retenue (30a) réalisé sous la forme d'un vêtement et susceptible d'épouser la partie corporelle (110a), destiné à retenir la chambre de pression (20a) contre la partie corporelle (110a) et présentant un canal (31a) ;
dans lequel
la chambre de pression (20a) est réalisée sous la forme d'un tuyau flexible qui serpente autour de la partie corporelle (110a) et qui est introduit dans le canal (31a) ;
le dispositif de retenue (30a) comprend au moins une première couche (32a) et au moins une seconde couche (33a) à agencer entre la partie corporelle (110a) et la chambre de pression (20a), couches entre lesquelles s'étend le canal (31 a), et
la seconde couche (33a) est extensible et la première couche (32a) est réalisée plus épaisse que la seconde couche (33a), de sorte que la seconde couche (33a) cède à une pression établie exercée par la chambre de pression (20a) sur la partie corporelle (110a), tandis que la première couche (32a) limite la propagation de la pression.

2. Appareil de fitness selon la revendication 1,
**caractérisé en ce que**
la chambre de pression (20a) présente une section transversale approximativement circulaire, la chambre de pression (20a) étant réalisée de préférence en silicone.

3. Appareil de fitness selon la revendication 1 ou 2,
**caractérisé en ce que**
la chambre de pression (20a) présente un dispositif de raccordement (21 a) et/ou au moins un dispositif de fermeture (25a).

4. Appareil de fitness selon l'une des revendications 1 à 3,
**caractérisé en ce que**
la chambre de pression (20a) présente une portion de base (23a) et au moins deux portions ramifiées (24a), un dispositif de ramification (22a) étant disposé entre la portion de base (23a) et les portions ramifiées (24a), qui relie la portion de base (23a) et les portions ramifiées (24a).

5. Appareil de fitness selon l'une des revendications 1 à 4,
**caractérisé en ce que**
le diamètre de la chambre de pression (20a) et/ou de la portion de base (23a) et/ou de la portion ramifiée (24a) est compris entre 10 mm et 40 mm, de préférence entre 20 mm et 30 mm.

6. Appareil de fitness selon l'une des revendications 1 à 5,
**caractérisé en ce que**
l'épaisseur de paroi de la chambre de pression (20a) et/ou de la portion de base (23a) et/ou de la portion ramifiée (24a) est comprise entre 0,1 mm et 2 mm, de préférence entre 0,2 mm et 1 mm, en particulier d'environ 0,5 mm.

7. Appareil de fitness selon l'une des revendications 1 à 6,
**caractérisé en ce que**
le dispositif de retenue (30a) est réalisé en un matériau élastique, en particulier en un matériau textile et de préférence respirant.

8. Appareil de fitness selon la revendication 7,
**caractérisé en ce que**
la première couche (32a) et la seconde couche (33a) sont réalisées avec ledit matériau textile.

9. Appareil de fitness selon la revendication 8,
**caractérisé en ce que**
le canal (31a) est formé par une couture (34a) qui délimite le canal (31a) et qui relie la première couche (32a) et la seconde couche (33a) l'une à l'autre.

10. Appareil de fitness selon l'une des revendications 1 à 9,
**caractérisé en ce que**
le vêtement est un pantalon.

11. Appareil de fitness selon l'une des revendications 1 à 10,
**caractérisé par**
deux chambres de pression (20a), le dispositif de pompage (16) étant apte à alimenter les chambres de pression (20a) en alternance avec le fluide.
